Europäisches Patentamt

European Patent Office

Office européen des brevets

(11) Publication number: **0 031 006**
**A1**

## (12) EUROPEAN PATENT APPLICATION

(21) Application number: **80106389.2**

(22) Date of filing: **20.10.80**

(51) Int. Cl.³: **B 01 D 53/04**

(30) Priority: 26.10.79 CA 338533
28.12.79 US 107860

(43) Date of publication of application:
**01.07.81** Bulletin **81/26**

(84) Designated Contracting States:
AT BE CH DE FR GB IT LI LU NL SE

(71) Applicant: **Ritter, Robert A.**
**5108 Varscliff Road, N.W.**
**Calgary Alberta(CA)**

(72) Inventor: **Ritter, Robert A.**
**5108 Varscliff Road, N.W.**
**Calgary Alberta(CA)**

(74) Representative: **Patentanwälte Dipl.-Ing. A. Grünecker,**
**Dr.-Ing. H. Kinkeldey, Dr.-Ing. W. Stockmair,**
**Dr. rer. nat. K. Schumann, Dipl.-Ing. P.H. Jakob, Dr. rer.**
**nat. G. Bezold Maximilianstrasse 43**
**D-8000 München 22(DE)**

(54) **A multiple vessel cascade gas enrichment adsorber.**

(57) A multiple vessel cascade gas enrichment adsorber is provided herein. A first stage adsorption vessel (13) is provided with a primary gas inflow means (12), a primary gas outflow means (32), and a mass of a suitable adsorbent material (36) in the vessel disposed between the primary gas inflow means (12) and the primary gas outflow means (32). At least one subsequent stage adsorption vessel (14) is provided in cascading interconnection with the first stage adsorption vessel (13) through an associated interstage loop line (15), each such subsequent stage adsorption vessel (14) being provided with a first gas inlet means (34), a first gas outlet means (30) and a mass of a suitable adso adsorption material (36) disposed between the first inlet means (34) and the first outlet means (30). The first outlet means (30) which is associated with the subsequent stage adsorption vessel (14) farthest downstream from the first stage adsorption vessel (13) is provided with an outlet back pressure regulator and non-return valve (24). Each such associated interstage loop line (15) includes a back pressure regulator and valve (23) therein. Secondary gas outlet means (18,19) lead to second secondary gas outlet lines (20) from each of the first stage adsorption vessel (13) and the subseqeunt stage adsorption vessel (14), each such secondary gas outlet means (18,19) including a plurality of vertically spaced-apart, horizontally extending collector means disposed within each such first stage adsorption vessel (13) and such subsequent stage adsorption vessel (14). Each such collector means is provided with a plurality of dispersed gas inlet ports. Diaphragm valves (21) are associated with each such collector means. Means actuate the diaphragm valves for alternate cyclical operation for a production period, defined as the period wherein the diaphragm valves are closed (to provide a long adsorption path from the primary inflow means to the first outlet means), and an evacuation period, defined as the period wherein the diaphragm valves are opened (to provide a short desorption path through the secondary outlet means). The individual volumetric size of the subsequent stage vessel or vessels must be smaller than the volumetric size of the first stage vessel. The cascading of the adsorbers significantly decreases the time required for regeneration by increasing the tolerance for residual adsorbate on the major portion of the adsorbent. Despite the cyclic nature of the process, the flow of product, e.g., oxygen is continuous.

./...

Fig 1

## Title of the Invention

A Multiple Vessel Cascade Gas

Enrichment Adsorber

### Technical Field to Which the Invention Relates

This invention relates to a multiple vessel cascade gas enrichment adsorber system including such adsorber and method of using such system, in which the adsorber includes a first stage adsorption vessel provided with a primary gas inflow means, a primary gas outflow means, and a mass of a suitable adsorbent material in the vessel disposed between the primary inflow means the the primary outflow means; secondary gas outlet means leading to secondary gas outlet lines from each first stage adsorption vessel; valves associated with each such secondary gas outlet means; and means for actuating the valves for alternate cyclical operation for a production period wherein the valves are closed to provide a long adsorption path from the primary inflow means to the primary outflow means, and an evacuation period wherein the valves are opened, to provide a short desorption path through the secondary outlet means.

### Relevant Background Art

Many processes, systems and apparatuses have been proposed to separate a mixture of gases and vapors into its constituent compoents. Most involve either complicated procedures or require the use of equipment which is expensive both to assemble and to operate.

In one conventional type of gas-solid or vapor-solid adsorption process, the feed mixture is permitted to enter one end of a packed bed of adsorbent and the desired product is recovered from the opposite end. This process continues for a sufficient period of time, determined by the time when the bed becomes saturated with the more strongly adsorbed components and the product purity begins to deteriorate below acceptable limits. At this point regeneration of the adsorbent is accomplished by reducing the pressure and/or increasing the temperature of the adsorbent and by withdrawing the evolved contaminants from one end or other of the adsorbent bed. The resistance to flow offered by the adsorbent bed over its full length causes the elimination of the contaminants to occur very slowly. The time required for regeneration is often much longer than the time required for adsorption which is usually prohibitively long when a high frequency production-regeneration cycle is desired.

It has been discovered that, when a mixture of two or more gases or vapors is permitted to pass through a cylindrical column packed with an adsorbent which possesses a high affinity toward at least one of the components in the mixture, for some significant period of time, the effluent from the column is relatively free of the more strongly adsorbed components. Moreover, saturation of the adsorbent by these components proceeds in a rather peculiar fashion. A clearly defined interface is established between the saturated and unsaturated regions in the column, and this interface moves progressively through the column until complete saturation is achieved and the strongly adsorbed components suddenly emerge as contaminents in the effluent product (the so-called "breakthrough"). The concentration of these contaminants then quickly increases to the level obtaining in the feed mixture. Prior to this point, operation must be terminated and the adsorbent must be regenerated in preparation for another production cycle.

Assessment of the Background Art

A thorough examination of the behaviour of the adsorbers reveals that, regardless of the particular separation process involved, certain desirable features of geometry and mode of operation should be provided, namely:

1. An adsorbent should be used which possesses a high capacity for the adsorbate (the strongly adsorbed component) to enhance both the quality and quantity of recovered effluent product.

2. A long time period should be taken before breakthrough of the contaminating component to increase the period of the cycle and permit sufficient time for regeneration of the saturated adsorber.

3. A minimum adsorption column cross-section is desirable to afford a uniform feed distribution and, hence, to minimize channelling of the contaminent through the column.

4. A high feed flow rate is desirable to improve the rate of mass transfer between the mixture and the adsorbent.

5. An adsorbent should be used with a maximum tolerance for high concentrations of adsorbate in the feed.

6. A very small residual of the strongly adsorbed gas should remain on the adsorbent at the end of the regeneration portion of the cycle.

7. A rapid rate of regeneration of the adsorbent is desirable to minimize the non-productive portion of the cycle.

and 8. A geometry should be provided which permits a low pressure gradient across the adsorbent during regeneration in order to conserve energy.

While it is desirable to achieve these ends, this has not, in fact, been possible heretofore. It has not been possible, heretofore, to devise a simple geometry which permits the attainment of all of these objectives simultaneously. The first four, which pertain to the adsorption phase of the cycle, are favoured by a long column of minimum cross-section. The fifth is a function only of the properties of the adsorbent and gas mixture involved, and is unaffected by geometry. The sixth normally depends upon the period and type of regeneration and, in the case of vacuum regeneration, the residue decreases logarithmically with time. The last two, which pertain to the regeneration phase of the cycle, are improved by a reduction in length and an increase in cross-section of the column. Further, in this connection, it is noted that the time required for regeneration of a specified volume of adsorbent through application of a vacuum at either end of the adsorption column varies in a parabolic fashion with the length of the column. Clearly, regeneration of adsorbers of even modest length by this technique could require several hours.

One attempt to solve the problems noted above was suggested in Canadian Patent No. 986,424 issued March 30, 1976 to Robert A. Ritter and David G. Turnbull. In that patent, the improvement comprised passing the gas mixture, while under a positive pressure condition of up to 60 p.s.i.g. through a first adsorption zone containing an adsorbent material which is more selective to one gas than to another gas in that gaseous mixture, the adsorption zone also including a primary inlet means and a primary outlet means. The gas mixture was thus caused to travel a relatively long adsorption path from the inlet, through the adsorbent and out the primary outlet. By this means the gas which was more strongly adsorbed was retained in the adsorption zone and gas which was less strongly adsorbed by the adsorbent was withdrawn from the adsorption zone through a primary outlet zone which was substantially free of adsorbent material. The adsorbent was then regenerated and the more strongly adsorbed gas was removed from the adsorbent by the application of a sub-atmospheric pressure to the adsorbent in the adsorption zone through a distinct zone, a secondary outlet zone which was substantially free of adsorbent material. In this way, the desorbed gas travelled a relatively short, direct desorption path from the adsorbent to the distinct zone which was under sub-atmospheric pressure and then was removed through a secondary outlet connected to the sub-pressure distinct zone.

The above-identified Canadian Patent No. 986,424 also provided an improved adsorption-desorption system for selectively separating one gas from a mixture of gases. The system comprised compressor means for subjecting the mixture of gases to superatmospheric pressure. First storage means were provided which were operatively connected to the compressor means for temporarily storing the mixture of gases under pressure. A first pair of adsorption-desorption vessels was provided which was operatively connected to the storage means by gas inlet lines. Each vessel included an adsorption zone, primary inlet means to the adsorption zone, primary outlet means from the adsorption zone, secondary inlet means to the adsorption zone, secondary outlet means from the adsorption zone, and valve means actuatable selectively to open one only of the primary inlet means and the primary outlet means, or the secondary inlet means and the secondary outlet means. Primary gas withdrawal lines were provided leading from the primary outlet means of each vessel of the first pair of adsorption-desorption vessels. Similarly, secondary gas discharge lines were provided leading from the secondary outlet means of each vessel of the first pair of adsorption-desorption vessels to a source of sub-atmospheric pressure. Finally, control means were provided for cyclically and alternately operating one adsorption-desorption vessel under adsorption conditions, where its primary inlet and outlet were functional, while the other such adsorption-desorption vessel was operated under desorption conditions, where its secondary inlet and outlet were functional.

The above-identified Canadian Patent No. 986,424 also provided an apparatus for separating one gas from at least one other gas in a mixture of gases. The apparatus included a main chamber which was adapted to contain adsorbent material. The chamber was provided with perforated walls (e.g., rigid perforated tubes) within the chamber and elastomeric diaphragms were associated with the perforated walls or the rigid perforated tubes. A primary inlet means was provided to the chamber and also a secondary inlet means was also provided, and alternative primary and secondary outlet means were provided from the main chamber. The primary inlet and outlet means were disposed at intervals throughout the adsorbent bed and were arranged such that the feed gas mixture, in moving from the inlet to the outlet, must travel a relatively long path through the adsorbent bed while the secondary outlet means was interconnected to the perforated walls, i.e., the perforated tube structures. Pressure means were provided which were selectively actuatable to urge the diaphragm into engagement with the perforated wall structure to provide an unperforated combined structure.

That above-identified Canadian Patent No. 986,424 also provided a diaphragm valve. The valve included a hollow casing provided with main gas inlet and gas outlet ports. A hollow sleeve was disposed within the casing, this hollow sleeve including gas impermeable sealed ends and a central portion which was gas permeable or perforated or slotted. A pair of perforated members were disposed one at each end of the hollow sleeve member, and these members extended outwardly from the hollow sleeve member to the interior wall of the hollow casing. An elastomeric tubular diaphragm was secured to the ends of the sleeve and enveloped the central zone of the sleeve. The interior of the sleeve communicated to a source of a pressure fluid so that when the fluid pressure was applied, the diaphragm expanded to come into sealing engagement with the perforated members so as to provide a combined unperforated member. By these means, no gas flowed between the gas inlet and gas outlet ports. Releasing the pressure permitted gas flow between the inlet and outlet ports.

While the above-identified Canadian Patent No. 986,424 was partially effective in solving some of the problems outlined above, certain other deficiencies were encountered due to the configuration in which the desorption elements comprised perforated tubes disposed within and extending the length of the absorbent bed. The tubes enclosed full length diaphragm valves which, when expanded, closed the perforations and isolated the vacuum system from the bed. The presence of these long, relatively large diameter diaphragms in the desorption tubes represented a significant resistance to flow of desorbed adsorbate, especially at low absolute pressures, and hence tended to increase the pump down-time. Moreover, the frequent cyclical engagement of the diaphragm with the perforations in the tube wall caused excessive wear of the diaphragm and necessitated special treatment of the circumferential inner edge of the perforations. Finally, appreciable quantities of air were required to operate the large diaphragm. As a result, diaphragm expansion was slower and compressor capacity was needlessly consumed.

Other proposals for this type of gas separation and/or purification are taught in the following patents:

| German Patent No. | 453,887, | December 20, 1927 |
| German Patent No. | 578,485, | June 14, 1933 |
| United States Patent No. | 2,254,799, | September 2, 1941 |
| United States Patent No. | 3,141,748, | July 21, 1964 |
| United States Patent No. | 3,242,651, | March 29, 1966 |
| United States Patent No. | 3,430,418, | March 4, 1969 |
| United States Patent No. | 3,533,221, | October 13, 1970 |
| United States Patent No. | 3,619,984, | November 16, 1971 |
| United States Patent No. | 3,719,025, | March 6, 1973 |
| United States Patent No. | 3,923,477, | December 2, 1975 |
| United States Patent No. | 3,957,463, | May 18, 1976 |
| United States Patent No. | 3,977,845, | August 31, 1976 |
| United States Patent No. | 4,070,164, | January 24, 1978 |
| United States Patent No. | 2,075,036, | March 1937 |
| United States Patent No. | 3,080,219, | March 1963 |
| United States Patent No. | 3,085,379, | April 1963 |
| United States Patent No. | 3,140,931, | July 1964 |
| and United States Patent No. | 3,432,995, | March 1969. |

In spite of the teachings of the above patents, the problem still exists of efficient adsorption and subsequent efficient desorption by significantly decreasing the time for regeneration of the adsorbent.

Disclosure of Invention as Claimed

The invention as claimed is intended to provide a remedy for the above-noted problem. It solves such problem by providing at least one subsequent stage adsorption vessel in cascading interconnection with the first stage adsorption vessel through an associated interstage loop line, each such subsequent stage adsorption vessel being provided with a first gas inlet means, a first gas outlet means and a mass of a suitable adsorption material disposed between the first inlet means and the first outlet means, the first gas outlet means which is associated with the subsequent stage adsorption vessel farthest downstream from the first stage adsorption vessel being provided with an outlet back pressure regulator and non-return valve, each such associated interstage loop line including a back pressure regulator and valve therein, each subsequent stage adsorption vessel also including secondary gas outlet means leading to the secondary gas outlet lines, each such subsequent stage secondary gas outlet means including a plurality of vertically spaced-apart, horizontally extending collector means, disposed within each such subsequent stage adsorption vessel, each collector means being provided with a plurality of dispersed gas inlet ports, diaphragm valves being associated with each such collector means, and the individual volumetric size of the subsequent stage adsorption vessels being smaller than the volumetric size of the first stage vessel.

The invention in its operation of the above-described inventive apparatus having a first adsorber set and a second adsorber set, each adsorber set being as described above, cyclically subjects each set to a production period and to an evacuation period, and the method provides a sequential plurality of cycles, each cycle comprising: carrying out the production period in the first adsorber set by flowing gas through an enclosed adsorption zone in the sequential steps of atmospheric intake, compressor feed and atmospheric blowdown, while substantially simultaneously carrying out the evacuation period in the second adsorber set by subjecting an enclosed adsorption zone to sub-atmospheric pressure in the sequential steps of a first and subsequent stage evacuation followed by subsequent stage evacuation; and carrying out the production period in the second adsorber set by flowing gas through an enclosed adsorption zone in the sequential steps of atmospheric intake, compressor feed and atmospheric blowdown, while substantially simultaneously carrying out the evacuation period in the first adsorber set by subjecting an enclosed adsorption zone to sub-atmospheric pressure in the sequential steps of a first and subsequent stage evacuation, followed by a subsequent stage evacuation.

## Other Disclosures of the Invention

By one feature of the multiple vessel cascade gas enrichment adsorber of this invention, there is one first stage adsorption vessel and only one subsequent stage adsorption vessel.

By a feature thereof, gas passes downwardly through the first stage adsorber vessel from the primary inflow means to the primary outflow means, then through the interstage loop line, and then upwardly through the subsequent stage adsorber vessel from the first inlet means to the first outlet means.

By another feature, the collector means comprises hollow, tubular, empty grid-work arrangements.

By a still further feature, the collector means comprises permeable rigid foam discs or toroids.

By yet another feature, retainers are included within each primary stage adsorption vessel and subsequent stage adsorption vessel to retain the mass of adsorbent material within each associated such vessel.

By a further feature, each secondary outlet means in each adsorber set leads to a common gas header subjected to sub-atmospheric pressure.

By yet a further feature, the diaphragm valves associated with the collector means comprise: a capped hollow core provided with at least one perforation through the wall thereof; a molded diaphragm secured to the hollow core at a pair of spaced-apart locations on either side of the perforation, the diaphragm having thicker walls adjacent the secured ends thereof than at the region of the perforation; and means for applying gaseous pressure to the capped hollow core; thereby to expand the diaphragm into sealing engagement with the inner walls of the secondary gas outlet line.

By yet a further feature, the interstage loop line is provided with a diaphragm valve comprising: a capped hollow core provided with at least one perforation through the wall thereof; a molded diaphragm secured to the hollow core at a pair of spaced-apart locations on either side of the perforation, the diaphragm having thicker walls adjacent the secured ends thereof than at the region of the perforation; and means for applying gaseous pressure to the capped hollow core; thereby to expand the diaphragm into sealing engagement with the inner walls of the interstage loop line.

By a still further feature, the back pressure regulator and the valve in the primary outlet means from the last subsequent stage adsorption vessel comprises: a capped hollow plug having at least one perforation through the wall thereof; a tubular molded diaphragm disposed along the central region of the plug, the diaphragm having walls whose thickness decreases gradually from the bottom to the top thereof, the diaphragm being secured only at the bottom thereto but being selectively movable longitudinally along the capped hollow plug, to situate the diaphragm with respect to the perforation so that a selected diaphragm thickness is opposite the perforation; and means for supplying gas under pressure within the hollow plug; whereby the unsecured area of the diaphragm is urged open upon the application of a selected pressure dependent on the thickness of the diaphragm opposite the perforation, thereby to provide an annular flow passage.

By yet another feature, the individual volumetric size of the subsequent stage vessels comprises from about 5 to about 50% of that of the volumetric size of the first stage adsorption vessel.

By another feature of the invention, a multiple vessel cascade gas enrichment adsorber system is provided which includes at least two interlinked multiple vessel cascade gas enrichment adsorber sets and also includes means for cyclically feeding a gaseous mixture to a selected one of the adsorber set of vessels; means for cyclically withdrawing enriched gas from a selected one of the adsorber set of vessels; and control means for cyclically operating one such adsorber set of vessels in its adsorption mode, and for operating another such adsorber set in its regeneration mode.

By a further feature of the invention, a multiple vessel cascade gas enrichment adsorber system is provided which includes at least two interlinked multiple vessel cascade gas enrichment adsorber sets and further includes means for cyclically feeding a gaseous mixture to a selected one of the adsorber set of vessels; and means for cyclically withdrawing enriched gas from a selected one of the adsorber set of vessels; means for temporarily storing the withdrawn enriched gas; means for selectively either recycling the stored withdrawn gas for use as all or a part of the gaseous mixture fed by the cyclic feeding means or for recovering the stored withdrawn gas; and control means for cyclically operating one such adsorber set of vessels in its adsorption mode, and for operating another such adsorber set in its regeneration mode.

By yet a further feature of the invention, a multiple vessel cascade gas enrichment adsorber system is provided which includes at least two interlinked multiple vessel cascade gas enrichment adsorber sets including: a drier vessel interconnected between the gas infeed line and the first stage adsorption vessel and also connected to the collector means; and a product gas storage vessel connected to the product outflow line; and further including means for cyclically feeding a gaseous mixture to a selected one of the adsorber set of vessels; means for cyclically withdrawing enriched gas from a selected one of the adsorber set of vessels; and control means for cyclically operating one such adsorber set of vessels in its adsorption mode and for operating another such adsorber set of vessels in its regeneration mode.

By still another feature of the invention, a multiple vessel cascade gas enrichment adsorber system is provided which includes at least two interlinked multiple vessel cascade gas enrichment adsorber sets including: a recycle gas temporary gas storage vessel connected to the product outflow line; and further including means for cyclically feeding a gaseous mixture to a selected one of the adsorber set of vessels; means for cyclically withdrawing enriched gas from a selected one of such adsorber set of vessels; means for temporarily storing the withdrawn enriched gas; means for selectively recycling the temporarily stored withdrawn gas for use as all or a part of the gaseous mixture fed by the cyclic feed means; and control means for cyclically operating one such adsorber set of vessels in its adsorption mode and for operating another such adsorber set of vessels in its regeneration mode.

By one feature of the above-described multiple vessel cascade gas enrichment adsorber systems of this invention, the system includes a common gas infeed line to the adsorber set, the common gas infeed line being provided with suitable valves selectively actuatable to feed a selected adsorber set.

By another feature, the system, either with or without the aforementioned common gas infeed line, includes a common product outlet line from the adsorber sets, the product outlet line being provided with suitable valves, selectively actuatable to withdraw product gas from a selected adsorber set.

By still another feature, the suitable valves comprise: a capped hollow core provided with at least one perforation through the wall thereof; a molded diaphragm secured to the hollow core at a pair of spaced-apart locations on either side of the perforation, the diaphragm having thicker walls adjacent the secured ends thereof than at the region of the perforation; and means for applying gaseous pressure to the capped hollow core; thereby to expand the diaphragm into sealing engagement with the inner walls of the common line.

By yet another feature of this invention, a multiple vessel cascade gas enrichment adsorber system is provided which includes at least two interlinked multiple vessel cascade gas enrichment adsorber sets as described above including: such subsequent stage adsorption vessel being disposed within the same vessel as the first stage adsorber vessel; the collector means being disposed vertically rather than horizontally; and a drier disposed within the same vessel as the first stage adsorber vessel and preceding the first stage adsorber vessel, the drier including a diaphragm valved bifurcated inlet means, a diaphragm valved inlet to the first stage of the adsorber set, and a diaphragm valved outlet from the subsequent stage adsorption vessel through the drier; and further including means for cyclically feeding a gaseous mixture to a selected one of the adsorber set of vessels; means for cyclically withdrawing enriched gas from a selected one of the adsorber set of vessels; and control means for cyclically operating one such adsorber set of vessels in its adsorption mode, and for operating another such adsorber set in its regeneration mode.

In addition, by a feature of the multiple vessel cascade gas enrichment adsorber systems of this invention, the drier comprises a vessel provided with primary gas inlet means, primary gas outlet means and a mass of a suitable adsorption material disposed between the primary gas inlet means and the primary gas outlet means, secondary gas inlet means leading from the secondary gas outlet means of the adsorber set, and secondary gas outlet means leading to secondary gas outlet line.

By another feature, the secondary gas outlet means of such drier includes a plurality of vertically spaced-apart, horizontally extending collector means disposed therewithin, each such collector means being provided with a plurality of dispersed gas inlet ports, the collector means including a diaphragm valve associated therewith.

By a feature thereof, in the drier, the collector means comprises hollow, tubular, empty grid-work arrangements.

By another feature thereof, in the drier, the collector means comprises permeable rigid foam discs or toroids.

By still another feature thereof, in the drier, the secondary outlet means in each adsorber set leads to a common gas header subjected to sub-atmospheric pressure.

By yet another feature thereof, in the drier, the diaphragm valve comprises: a capped hollow core provided with at least one perforation through the wall thereof; a molded diaphragm secured to the hollow core at a pair of spaced-apart locations on either side of the perforation, the diaphragm having thicker walls adjacent the secured ends thereof than at the region of the perforation; and means for applying gaseous pressure to the capped hollow core; thereby to expand the diaphragm into sealing engagement with the inner walls of the secondary gas outlet line.

By a further feature of the method of this invention, the step of atmospheric intake is achieved with oxygen-enriched air recycled from a previous adsorption stage.

By another feature, the step of compressor feed is achieved with air supplemented by oxygen-enriched air recycled from a previous adsorption stage.

By a still further feature, the step of compressor feed is achieved with oxygen-enriched air recycled from a previous adsorption phase.

By one feature of these methods of this invention, there is one first stage adsorption vessel and only one subsequent or second stage adsorption vessel, and the method comprises carrying out such evacuation period by drawing through both the first stage adsorption vessel and the second stage adsorption vessel until a first predetermined vacuum level is reached; and then drawing through only the second stage adsorption vessel at a high predetermined vacuum level, until the evacuation phase of the cycle is essentially completed.

By a further feature thereof, the first predetermined vacuum level is about 25 to about 150 mm Hg absolute pressure, and the higher predetermined vacuum level is about 2 to about 30 mm Hg absolute pressure.

By another feature of these methods of the invention, there is one first stage adsorption vessel, a second subsequent stage adsorption vessel, and a third subsequent stage adsorption vessel, and the method comprises carrying out the evacuation period by drawing through the first stage adsorption vessel and through the second and third subsequent stage adsorption vessels, until a first predetermined vacuum level is reached; then drawing only through the second stage adsorption vessel and the third stage adsorption vessel until a second higher predetermined vacuum level is reached; and finally drawing through only the third stage adsorption vessel at a still higher predetermined vacuum level until the evacuation phase of the cycle is essentially completed.

This invention also provides in another embodiment a diaphragm for use with a hollow, gas conducting tube to control the flow of gas therethrough comprising: a capped hollow core provided with at least one perforation through the wall thereof; a molded diaphragm secured to the hollow core at a pair of spaced-apart locations on either side of the perforation, the diaphragm having thicker walls adjacent the secured ends thereof than at the region of the perforation; and means for applying gaseous pressure to the capped hollow core; thereby to expand the diaphragm into sealing engagement with the inner walls of the gas conducting tube.

By one feature of the diaphragm valve of this invention, the hollow core is provided with a plurality of perforations.

By another feature, the hollow core is provided with a pair of spaced-apart protrusions whereby the diaphragm may be secured thereto by tapered rings.

By still another feature, the diaphragm is secured to the hollow core by means of O-rings cooperatively engaging with spaced-apart grooves on the circumference of the hollow core.

By a still further feature, the diaphragm is formed from butyl rubber.

This invention provides, in still another embodiment, a back pressure regulator and non-return valve comprising: a capped hollow plug having at least one perforation through the wall thereof; a tubular molded diaphragm disposed along the central region of the plug, the diaphragm having walls whose thickness decreases gradually from the bottom to the top thereof, the diaphragm being secured only at the bottom thereto but being selectively movable longitudinally along the capped hollow plug, to situate the diaphragm with respect to the perforation so that a selected diaphragm thickness is opposite the perforation; and means for supplying gas under pressure within the hollow plug; whereby the unsecured area of the diaphragm is urged open upon the application of a selected pressure dependent on the thickness of the diaphragm opposite the perforation, thereby to provide an annular flow passage.

By a feature of the back pressure regulator and non-return valve of this invention, the capped hollow plug includes a plurality of perforations through the wall thereof.

By another feature, the diaphragm is secured to the capped hollow plug by cooperation between a tapered locking ring and an annular locking projection on the capped hollow plug.

By a further feature, the diaphragm is secured to the capped hollow plug by means of an O-ring cooperatively engaging with a groove on the circumference of the capped hollow plug.

By a still further feature, the diaphragm valve is formed of butyl rubber.

As well, by yet another embodiment, this invention provides a storage vessel comprising: a closed vessel; a mass of adsorbent material disposed within the vessel; means providing entry into the closed vessel and selectively actuatable to provide inlet means to, or outlet means from, the vessel; and a perforated tube connected to the entry means and extending axially along the length thereof, for the introduction of gas to be stored therein along a long adsorption path, and removal of gas stored therein along a short desorption path.

By one feature of the storage vessel of this invention, the storage vessel is in the form of a cylinder.

By another feature, the perforated tube includes perforations uniformly spaced both circumferentially thereon and longitudinally therealong.

Advantageous Effects of the Invention

The advantages offered by the invention are mainly due to the fact that an adsorption system has been devised in which, firstly, the adsorber geometry can be varied to suit all phases of the operating cycle and, secondly, the cascading of adsorbers significantly decreases the time required for regeneration by increasing the tolerance for residual adsorbate on the major portion of the adsorbent.

Accordingly, this invention provides a simple process, system and apparatus which may be employed in a multitude of situations where the separation, purification, and/or concentration of gaseous mixtures is desired; a process, system and apparatus whereby a gaseous mixture may be separated into a series of effluent product streams, in which at least one such stream is rich in one component portion of the gaseous mixture supplied as a feed material; a process, system and apparatus whereby oxygen-rich products may be recovered from atmospheric air without the use of liquefaction procedures; a process, system and apparatus whereby one gas, e.g., hydrogen, may be recovered from a natural gas mixture without the need for complicated liquefaction procedures; and such a process, system and apparatus whereby relatively small amounts of adsorbent material are required, and whereby, consequently, expenditures for equipment may be reduced.

Several embodiments of ways of carrying out the invention are described in detail below with reference to drawings which describe several preferred embodiments in which:

Figure 1 is a schematic representation of a multiple vessel cascade gas enrichment system set of one embodiment of this invention;

Figure 2 is a central vertical section of a two-vessel cascade gas enrichment adsorber of one embodiment of this invention;

Figure 3 is a cross-section along the line III-III of Figure 2;

Figure 4 is a central vertical section of a two-vessel cascade gas enrichment adsorber of another embodiment of this invention;

Figure 5 is a cross-section along the line V-V of Figure 4;

Figure 6 is a schematic representation of an adsorber system set of yet another embodiment of this invention;

Figure 7 is a central vertical section of a drier of an embodiment of this invention adapted to be used in the adsorber system set of Figure 6;

Figure 8 is a central vertical section of an integrated two-vessel cascade gas enrichment adsorber of still another embodiment of this invention;

Figure 9 is a central vertical section of an adjustable back pressure regulator and non-return valve of an embodiment of this invention;

Figure 10 is a central vertical section of a diaphragm valve of an embodiment of this invention, in its "open" configuration;

Figure 11 is a central vertical section of the diaphragm valve of Figure 10, in its "closed" configuration;

Figure 12 is a central vertical section of a gas storage vessel of another embodiment of this invention; and

Figure 13 is a schematic flow diagram of the method of one embodiment of this invention.

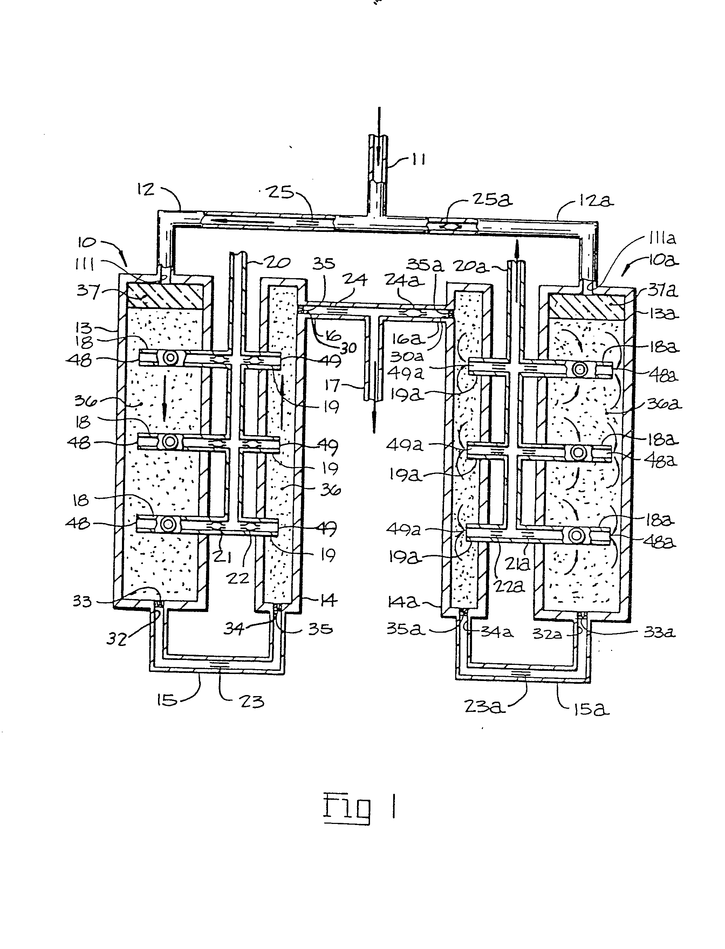

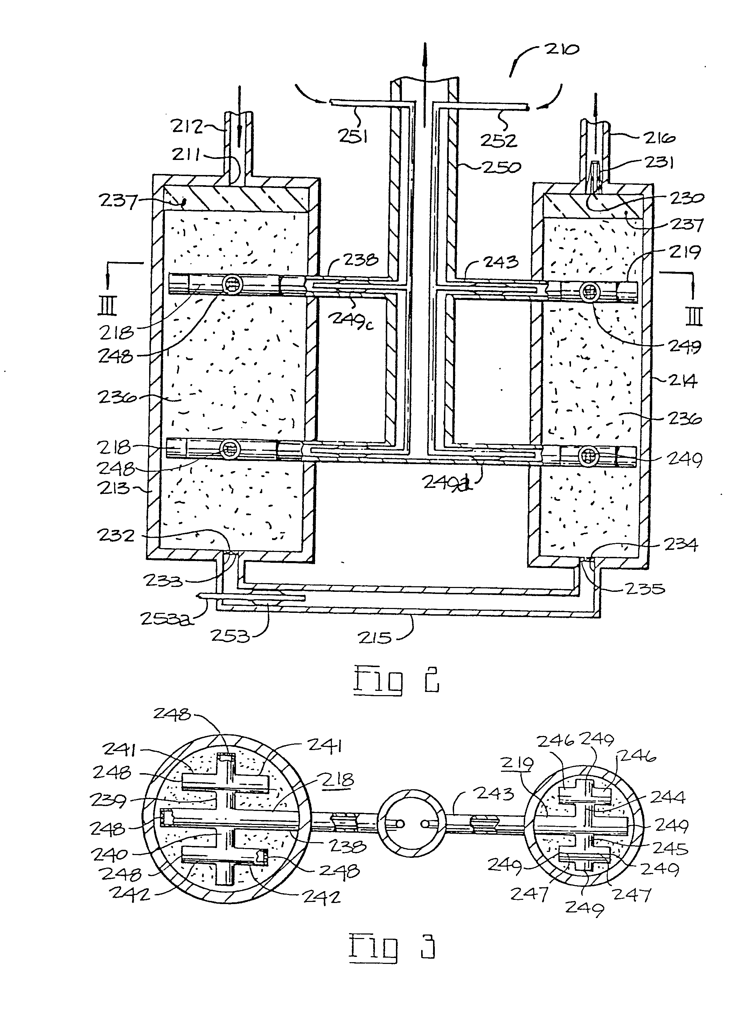

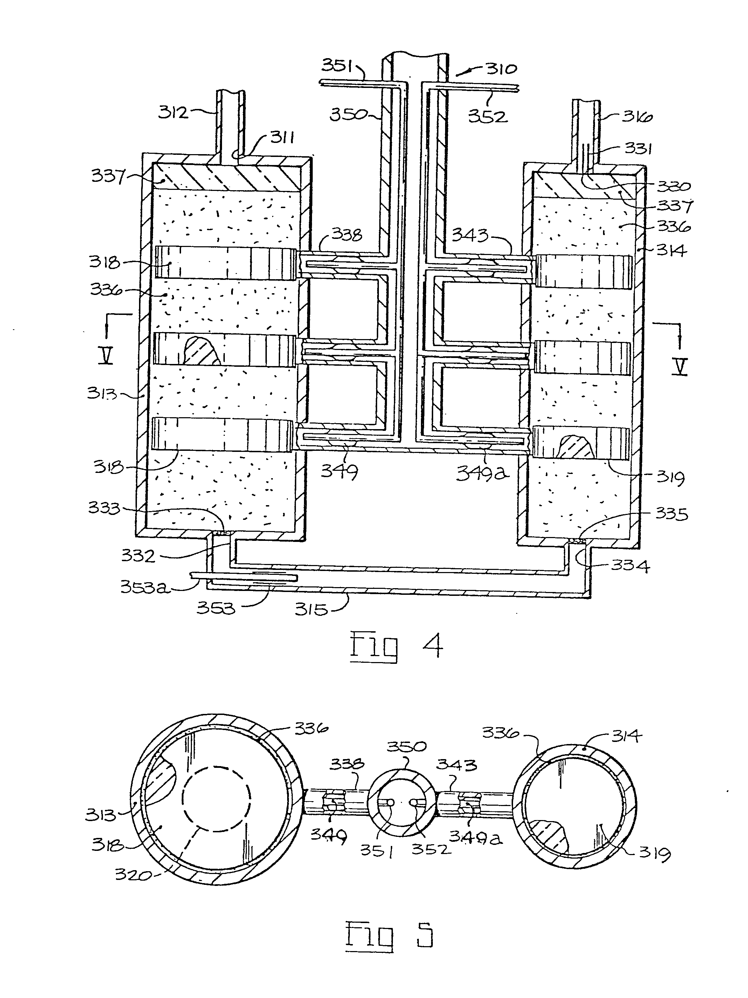

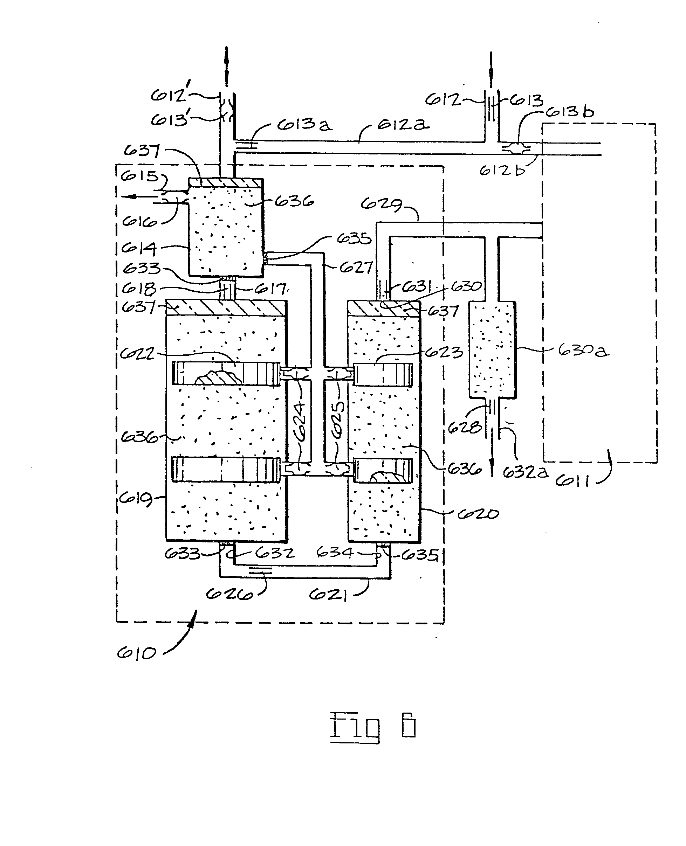

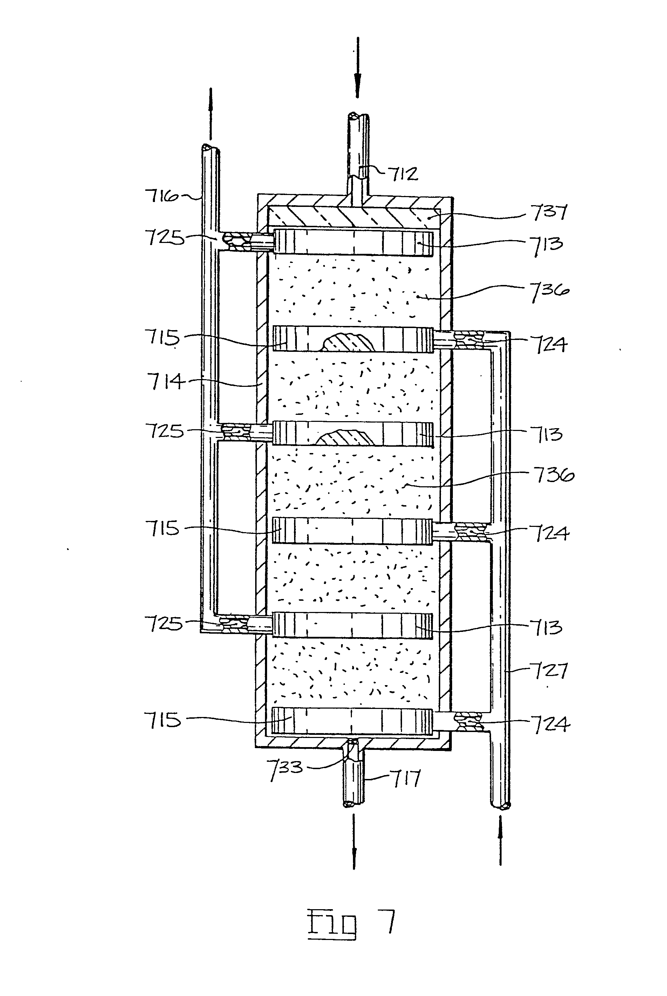

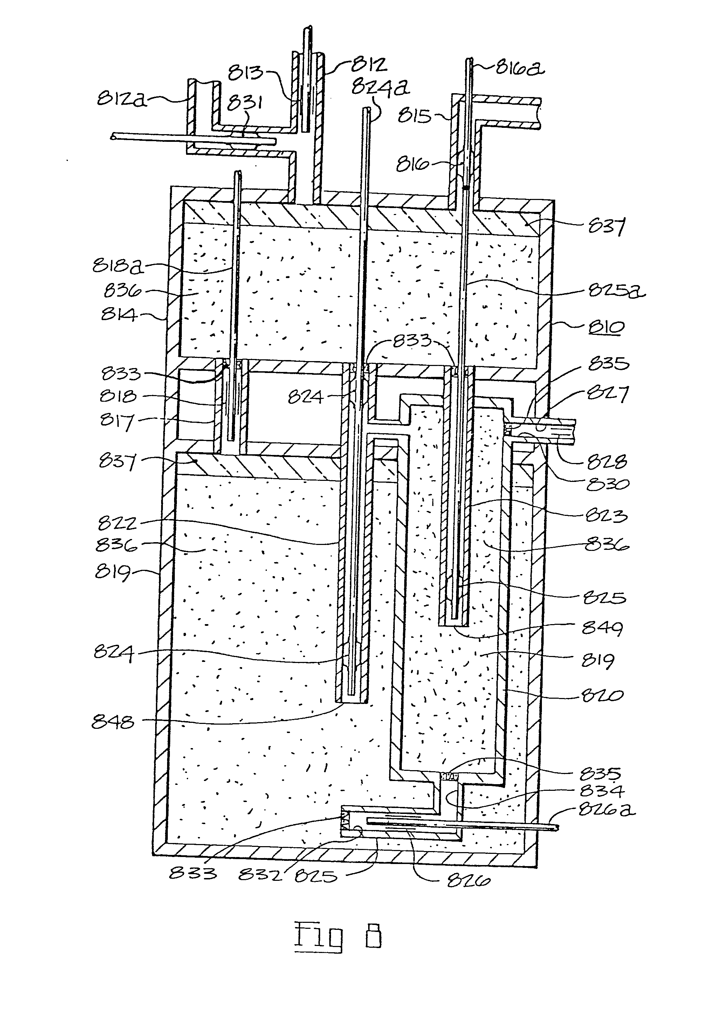

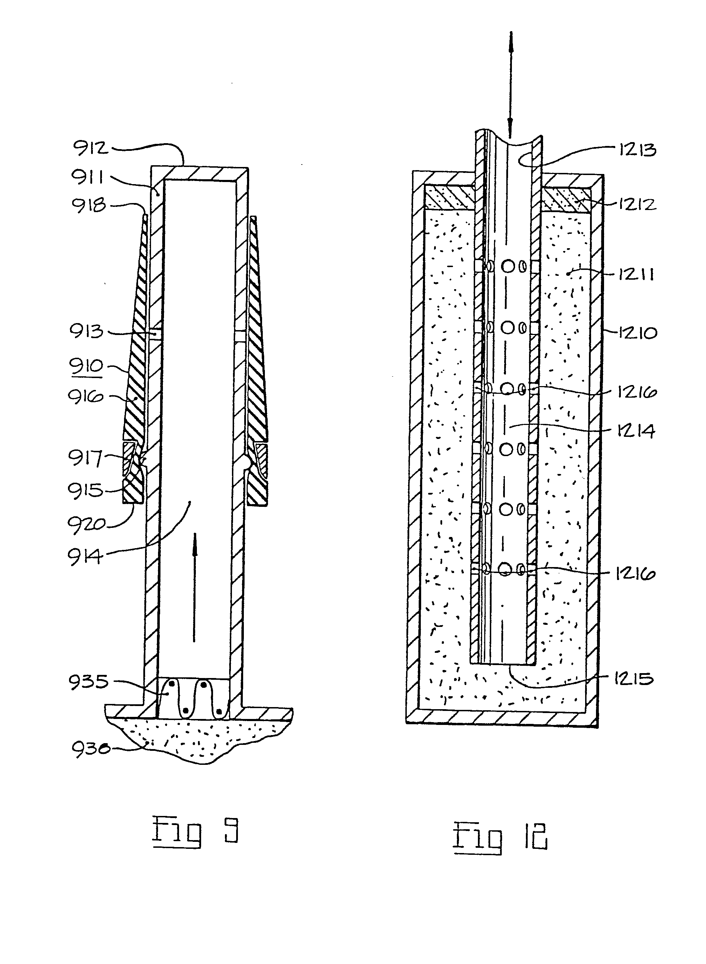

As seen in Figure 1, the gas enrichment system of this invention includes a pair of cascaded adsorption vessel sets 10, 10a, each vessel set containing a suitable adsorbent material (36, 36a). As shown, set 10 is in its adsorption phase, while set 10a is in its regeneration phase.

A main gas infeed line 11 bifurcates in two infeed lines 12, 12a leading through valves 25, 25a to primary vessel 13 of set 10 and to primary vessel 13a of set 10a. Since set 10 is in its adsorption phase, valve 25 is shown in its open condition and conversely, since set 10a is in its regeneration phase, valve 25a is shown in its closed condition. Primary vessels 13, 13a are connected to secondary vessels 14, 14a by interstage loop line 15, 15a, respectively. Product is withdrawn from secondary vessel 14, 14a by product withdrawal line 16, 16a, respectively, joining to a common product outflow line 17. Interstage loop lines 15, 15a are each provided with back pressure regulators, e.g., diaphragm valves 23, 23a, preferably of a construction to be described hereinafter. Valves 23 and 23a are each shown in an open condition. Lines 16, 16a are likewise provided with back pressure regulators and non-return valves 24, 24a, preferably of a construction to be described hereinafter. To enable sets 10 and 10a to function in the manner specified, valve 24 is shown in its open condition, while valve 24a is shown in its closed condition.

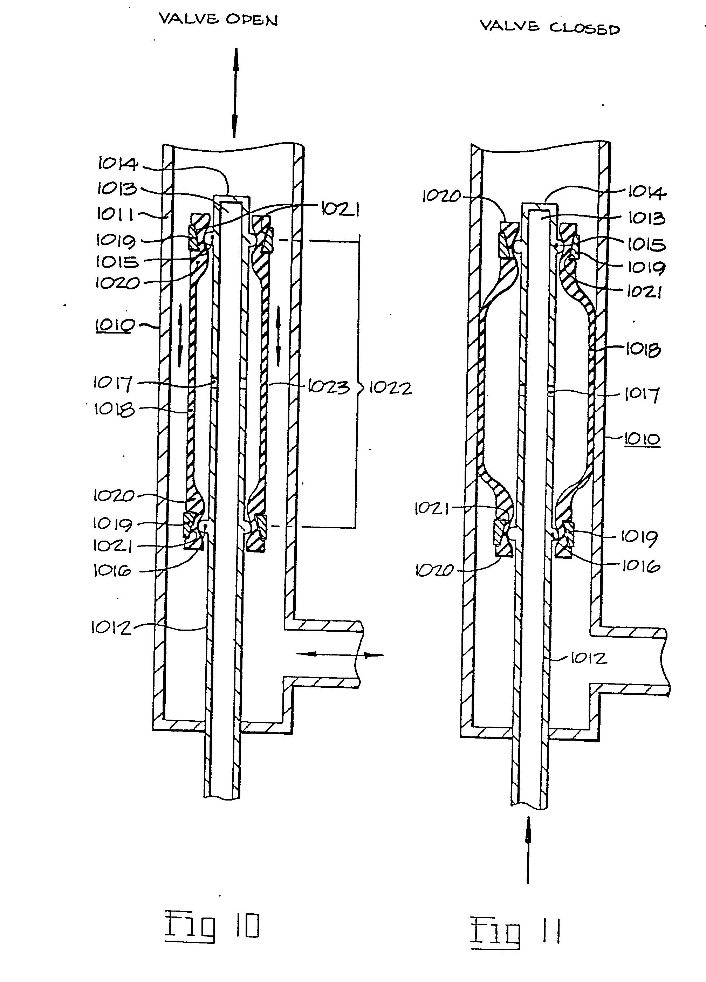

Primary vessels 13, 13a and secondary vessel 14, 14a are each provided with secondary outlet means defined by a plurality of vertically spaced-apart, horizontally disposed collector means, namely primary gas collectors 18, 18a within primary vessel 13, 13a, respectively, and secondary gas collectors 19, 19a within secondary vessel 14, 14a, respectively. The inlets to primary gas collector means 18, 18a are provided with screens 48, 48a, and similarly the inlets to secondary gas collector means 19, 19a are provided with screens 49, 49a. Collector means 18, 19 are interconnected to vertical evacuation tube 20, and collector means 18a, 19a are similarly interconnected to vertical evacuation tube 20a, each evacuation tube 20, 20a being connected to a source of vacuum (not shown). Primary gas collector means 18, 18a are provided with a plurality of suitable valves, e.g., diaphragm valves 21, 21a, respectively, while secondary gas collector means 19, 19a are likewise provided with a plurality of suitable valves, e.g., diaphragm valves 22, 22a, respectively. To enable sets 10 and 10a to function in the manner specified, valves 21, 22 are shown in their closed condition, and valves 21a, 22a are shown in their open condition. The diaphragm valves 21, 21a, 22, 22a are preferably of a structure to be described hereinafter with reference to Figures 10 and 11.

Each vessel 13, 14 of set 10 is substantially filled with a suitable adsorbent material 36 and each vessel 13a, 14a of set 10a is also substantially filled with a suitable adsorbent material 36a. Vessels 13, 13a are provided with porous hold-down means 37, 37a at inlet apertures 111, 111a, in order to prevent disruption of the adsorbent material 36, 36a during use. Vessels 13, 13a are provided with porous plugs 33, 3a at outlet apertures 32, 32a, to retain the adsorbent material 36, 36a within the vessel. In addition, the inlet apertures 34, 34a and outlet apertures 30, 30a of vessels 14, 14a are each provided with porous plugs 35, 35a to retain the adsorbent 36, 36a in the respective vessels.

Thus, as noted above, each adsorption vessel of each set is provided with a collector means located within the columns. These collector means are opened or closed by associated tubular diaphragm valves during regeneration or production in each adsorber set. During the production phase of the cycle with the diaphragm valve associated with the infeed line retracted, i.e., open, and with the diaphragm of the associated diaphragm valve operatively associated with the respective collector means expanded, i.e., closed, and with the ports to the associated evacuation tube sealed, as shown by the left hand vessel set shown in Figure 1, the adsorption vessel appears, to the incoming feed air, as a column of ideal length. At the same time, the right hand vessel set shown in Figure 1, under going regeneration, appears to the vacuum system, as an adsorber of very short bed depth since the diaphragm valve associated with the infeed line expanded, i.e., closed, and with the diaphragm valves associated with the collector means are retracted, i.e., are open, and the ports to the evacuation tube are open.

In operation, dry air at atmospheric pressure is permitted to enter the first adsorber set. When equilibrium is achieved, compressed air, for example, at 15 to 60 psi pressure, is introduced into the first adsorber set, and the enriched oxygen product is withdrawn from outlet tube 17. During the same period, the second adsorber set is being regenerated with the aid of a vacuum pump. The time required for a complete cycle of operation may vary from a few seconds to several minutes. Since the process is cyclic in nature and the oxygen production rate varies with time, a storage vessel is preferred in order effectively to smooth the flow of product at the outlet. A control system is responsible for the overall supervision of the process and the proper sequencing of the various functions in a fully automatic fashion and essentially without operator intervention. The control system determines the status of all the diaphragm valves into and out of the system and establishes the absolute and relative vacuum levels of each vessel of the adsorber set during regeneration. Thus, in the early stages of regeneration of a particular adsorber set, all diaphragm valves associated with the collector means in all vessels are open. Then, at a predetermined vacuum level, the diaphragm valves associated with the collector means in the first stage vessel are closed. The vacuum is thus applied only to the second (and subsequent) stage vessels to regenerate such second (and subsequent) stage vessels. This sequential shutting down of the diaphragm valves in the preceding stage vessel is repeated for each subsequent stage vessel until the evacuation phase of the cycle is essentially completed.

An important feature of the present invention is related to the use of cascaded adsorption vessels which significantly increases the tolerance for adsorbate residuals in a major, or substantial, portion of the adsorbent and hence reduce the time and energy required for regeneration. During vacuum regeneration, the rate of adsorbate removal decreases approximately logarithmically with time. Consequently, a disproportionate amount of pumping energy is consumed for removal of residual quantities of adsorbate at low pressures. Although the quantity of adsorbate comprising the residual may not be significant from the point of view of reduction in adsorbent capacity, this material is efficiently eluted from the adsorbent during the subsequent production stage of the cycle and could seriously contaminate the product. Thus, through use of a cascade arrangement consisting of a large adsorption vessel followed by one or more smaller vessels, it is possible to operate with the major portion of the adsorbent at a relatively high adsorbate residual after regeneration (poor vacuum, e.g., from about 25 to about 150 mm Hg absolute pressure) and to remove the elute from the adsorbent contaminant in the secondary chamber in which regeneration is substantially more complete (higher vacuum, e.g., from about 2 to about 30 mm Hg absolute pressure). The volume of the secondary vessel is about 5% to about 30% of the volume of the primary vessel for best performance. The optimum size ratio depends upon operating conditions such as pumpdown pressure and production pressure in each vessel. In one instance, optimum performance was achieved when the volume of the secondary (i.e., subsequent stage) vessel was between about 5% and about 30%, e.g., about 15%, of the volume of the primary (i.e., the first stage) vessel. The net result of this process configuration and operating procedure is an increase of at least about 60% to about 100% in the production capacity of the system when compared to a conventional vacuum regenerated adsorption system of similar size and energy consumption.

As seen in Figures 2 and 3, the two-vessel cascade adsorber 210 of another embodiment of the present invention includes a cylindrical primary vessel 213 including an infeed aperture 211 connected to an infeed tube 212, and a secondary vessel 214 connected to the primary vessel 213 by an interstage loop 215 and discharging product through aperture 230 leading to product outflow tube 216. Product outflow tube 216 is provided with a pressure regulator and non-return valve 231, one example of which will be described hereinafter. Outflow aperture 232 from the first vessel 213 to interstage loop 215 is provided with adsorbent retainer 233, while inflow aperture 234 to secondary vessel 214 from interstage loop 215 is also provided with an adsorbent retainer 235. Each vessel 213, 214 is filled with a suitable adsorbent 236, which is retained in place by adsorbent retainer 237. Adsorbent is prevented from entering interstage loop 215 from vessels 213, 214 by means of porous plugs 232, 234, respectively. Secondary vessel 214 is provided with a back pressure regulator and non-return valve 231 in the product outflow tube 216 which preferably is the valve described in Figure 9.

Disposed in vertically spaced-apart, horitonzal orientation within primary vessel 213 and secondary vessel 214 are collector means in the form of a plurality of tubular grid arrangements 218, 219, respectively. As seen more clearly in Figure 3, grid arrangement 218 includes a main hollow tube 238, which leads to secondary hollow tubes 239, 240, which in turn lead to tertiary hollow tubes 241, 242. Similarly, grid arramgenet 219 includes main hollow tube 243, which leads to secondary hollow tubes 244, 245, which in turn leads to tertiary hollow tubes 246, 247. The free ends of hollow tubes 238 - 242 and 244 - 247 are each capped with adsorbent-excluding devices, e.g., screens 248, 249. The purpose of this pattern of the grid arrangement is to shorten the desorption path in the adsorbent 236.

Associated with each main hollow tube 238, 243 are diaphragm valves 249c, 249d one embodiment of whose construction will be described hereinafter. Valves 249c, 249d are shown in their closed condition. Main hollow tubes 238, 243 are interconnected to a main hollow vertical shaft 250, connected to a source of vacuum. Diaphragm valves 249c, 249d are each connected to respective valve control lines 251, 252. Also disposed within interstage loop 215 is an interstage back pressure regulator, which may be a diaphragm valve 253. Diaphragm valve 253 is shown in its closed condition. A control line 253a is also provided for this valve 253.

It will be observed that, if valves 253 and 231 are in their open condition and valves 249c, 249d are in their closed condition, gas flows in the direction of the arrow in infeed tube 212 and out through product outflow tube 216. On the other hand, when valves 253 and 231 are in their closed condition and valves 249c, 249d are open, gas flows in main hollow tubes 238, 243 and out main hollow vertical shaft 250, as shown by the arrow.

Figures 4 and 5 show an alternative embodiment of the two-vessel cascade adsorber 210 of Figures 2 and 3, in which all elements are the same and are thus identified by a "300" series number rather than a "200" series number as in Figures 2 and 3 except for the collector means, which are in the form of a plurality of rigid, highly permeable foamed glass or plastic members 318, 319, in the form of a disc, toroid or similar shape. As shown in Figure 5, the member 318 includes an optional central opening 320 therein, so that the member is in the form of a torus. This provides a suitable collector for larger adsorber vessels. Each disc 318, 319 is horizontally disposed, is of approximately the same diameter as the interior of the vessel 213, 214 but slightly less than the such diameter, and is placed adjacent to one of the secondary outlet ports employed for regeneration of the adsorbent. Since the fluid conductance of the foam is extremely high even at high vacuum, the disc provides communication with the adosrbent bed which is similar to that provided by the grid, and, thereby, effectively shortens the bed length during desorption.

The collectors 318, 319 are each associated with diaphragm valves in the same manner as collectors 218, 219 previously described with reference to Figures 2 and 3. Primary vessel 313 is provided with porous hold-down means 337 and porous plug 333 within outlet 332 to retain the suitable adsorbent material 336 therewithin. Similarly, secondary vessel 314 is provided with porous hold-down means 337 and porous plug 335 in inlet 334 to retain the suitable adsorbent material 336 therewithin. Outlet 316 from vessel 314 is proivded with a back pressure regulator and non-return valve 331. Valve 353, controlled by valve control line 353a, is shown in its open condition, while valves 349, 349a, controlled by valve control lines 351, 352, respectively, are shown in their closed condition.

Thus, as described hereinabove for Figures 2, 3, 4 and 5, the two vessels involved are preferably cylindrical, each having a length-to-diameter ratio of at least 2. The volume ratio decreases from the first to the subsequent stages. The specific volume ratio decreases depend upon the intended process operating conditions. As the pumpdown pressure in the first stage vessel increases, or as the process operating pressure increases, the volume ratio between the first and subsequent stage vessels decreases.

The two vessels are provided with adsorbent of a type which is appropriate for the specific gas mixture to be separated. For example, the separation of oxygen from nitrogen is readily accomplished with the aid of 5A molecular sieve.

To minimize attrition of the adsorbent during operation of the process, the vessels should be packed to a high density and any free volume which subsequently develops as a result of settling should be accommodated by some expandable device, e.g., a spring-loaded perforated plate or a highly permeable, flexible foamed resin located above and/or below the adsorbent bed.

Each vessel is provided with one or more hollow tubular desorption grids which are horizontally disposed within the adsorbent bed, which are substantially free of adsorbent, which penetrate the vessel wall at one or more locations to terminate in a vacuum header. Communication between the grid and the header is controlled by means of tubular diaphragm valves to be described later.

The size of the grid, the diameter of tubes in the grid, the number of communication holes, the number of headers and the vertical distance between individual grid structures depends upon the size of the vessel (production capacity of the process) and the maximum allowable desorption path length. This maximum value may vary from about 10 cm to about 50 cm and depends upon such variables as grain size of the adsorbent (shorter for small grain size), and the pumpdown pressure intended (shorter for lower ultimate absolute pressure).

The two vessels in each adsorber set are connected at one end through a suitable back pressure regulator which provides complete vacuum tight shut off until the pressure in the first vessel reaches some predetermined value, e.g., in the range from about 5 psig to about 50 psig. Once open, one function of the regulator is to ensure that the pressure in the first vessel does not decline at any time during the production cycle since this could result in contamination of the product due to some desorption of the adsorbed phase. As the pressure in the first vessel increases, the regulator aperture is progressively enlarged to permit, depending on the pressure gradient, increased flow to the second vessel.

The back pressure regulator valve is placed in the line connecting the two vessels and, in the event that a diaphragm valve is used for this purpose, is actuated with air precisely regulated at a pressure sufficient to expand the diaphragm into sealing engagement with the wall and to maintain this seal until the pressure in the first vessel attains the desired minimum controlled level. At any pressure above this value, the diaphragm will be forced to contract slightly, thereby permitting gas to flow into the second vessel. Thereafter, the diaphragm valve will perform as a proportional controller in its response to the pressure in the vessels since any tendency toward an increase in this pressure will cause the diaphragm to contract further and to enlarge the orifice which regulates flow into the second vessel.

The second vessel is similarly provided with a back pressure regulator at the outlet end. This device, which serves essentially the same purpose as that described above, operates at a predetermined pressure of, e.g., about 5 psi to about 30 psi below the pressure in the first vessel. The second vessel is also provided with a non-return valve to prevent back flow of product into the vessel during vacuum regeneration. The two back pressure regulators and non-return valves may be a single valve device which will be described hereinafter.

In order to minimize the rate of deactivation of adsorbent, e.g., 5A molecular sieve, feed gases to the adsorber may require drying to low dew points. e.g., in the ragne of about -40°C. to -50°C. The drying operation may be readily accomplished with the aid of numerous commercially available refrigeration or dessicant type driers. Among the latter, the familiar "heatless drier" concept is compatible with the system and exhibits several desirable features such as low capital and energy costs. The heatless drier is especially suited for use with small multiple vessel cascade gas enrichment systems of this invention since it may be advantageously incorporated into the first adsorber vessel structure, thereby substantially reducing capital costs and size and simplifying the process of drier regeneration.

A schematic representation of the multiple vessel cascade gas enrichment system of another embodiment of this invention is shown in Figure 6. In Figure 6, two identical drier and adsorber set combinations 610, 611 are provided, so that one set would be engaged in gas (e.g., oxygen) production, while the other set would be experiencing regeneration, and vice versa. Since sets 610 and 611 are identical, only set 610 has been shown in detail and will be described.

Inlet line 612, having a diaphragm valve controller 613 therein, leads via branch line 612b to set 611, which is not in its adsorption cycle since valve 613b is closed, and via branch line 612a through open valve 613a to a drier 614. Valve 613 and valve 613a are each shown open. An additional line 612' with valve 613' therein also leads alternatively to drier 614. When drying air is led in through line 612', valve 613' is open, and valves 613a and 613 are closed. Drier 614 has a secondary outlet line 615 leading to a source of vacuum (not shown) and is provided with a diaphragm valve 616, and includes an interconnecting line 617 provided with a diaphragm valve 618 leading to primary adsorption vessel 619. Drier 614 is substantially filled with a suitable adsorbent material 636, which is held in place by porous hold-down means 637 and porous plug 633. Primary vessel 619 is substantially filled with a suitable adsorbent material 636, held in place between porous hold-down means 637 and plug 633 at outflow aperture 632. Secondary vessel 620 is substantially filled with suitable adsorbent 636, held in place by porous hold-down means 637 and plug 634 at outlet aperture 630. Primary adsorption vessel 619 is connected to secondary adsorption vessel 620 primarily via interstage loop 621, and by secondary collector means 622, 623 (of a structure as previously described with reference to Figure 5). Collector means 622 are associated with diaphragm valves 624, while collector means 623 are associated with diaphragm valves 625. Interstage loop 621 is provided with back pressure regulator 626 which is shown in its open condition. Collector means 622, 623 are interconnected to vertical evacuation tube 627 which leads to drier 614. Collector means 622, 623 are preferably highly permeable foamed glass or plastic discs as described in Figures 4 and 5. Valves 624, 625 are shown in their closed condition.

Secondary vessel 620 discharges product gas through outlet back pressure regulator and non-return valve 631 which leads, via line 629, to storage vessel 630a, which preferably is of the structure shown in Figure 12, although somewhat modified by having outlet 632 provided with diaphragm valve 628. Branch line 612b of compressed air inlet line 612 leading to combination 611 is provided with an inlet diaphragm valve 613b. Since combination 611 is not in its adsorption phase, valve 613b is shown in its closed condition.

In operation, valve 613', located at the inlet of the previously regenerated adsorber 619, 620 and drier 614, as well as valve 618, located between the drier 614 and the first stage vessel 619, are opened to allow air to flow through the drier 614 to fill the evacuated first stage vessel 619 and to raise the pressure to approximately atmospheric. All other diaphragm valves in combination 610 are closed at this time. Valve 613' is then locsed by activating the associated diaphragm, and inlet valves 613 and 613a are opened, thereby supplying compressed dry air to the first stage vessel 619. Within that vessel 619, as the pressure increases, nitrogen, carbon dioxide and most other contaminating gases are strongly adsorbed on the adsorbent while the oxygen and argon are more weakly adsorbed and tend to concentrate in the gas phase. When the pressure in the first stage vessel 619 achieves a level equal to the set point of the intervessel back pressure regulator 626, the enriched oxygen flows into the smaller secondary vessel 620 for further purification. The pressure in the first stage vessel 619 then continues to increase gradually during the remainder of the production cycle, thereby providing additional oxygen feed to the secondary vessel.

Since the regeneration of the secondary vessel 620 is more complete than that of the first vessel 619, virtually all of the nitro gen impurity can be removed from the feed to this secondary vessel 620 to produce an oxygen product of up to about 95% oxygen purity with argon as the major contaminant. This oxygen product beings to emerge from the outlet aperture 630 of the secondary vessel 620 and into line 629 when the gas pressure in the secondary vessel 620 exceeds the set point of the outlet back pressure regulator 631.

When the adsorber set 610 is saturated with nitrogen, as evidenced, for example, by a sudden decrease in oxygen product purity emerging from line 632a through diaphragm valve 628, oxygen production is terminated by closing valves 613a, 618 and 631 and opening valves 624, 625. The compressed gas within the two vessels is thereby permitted to expand through the drier 614 in a reverse flow fashion and to escape to the atmosphere (or to the intake of a compressor if the adsorbed gas is to be retained). The expanding dry gas serves partially to regenerate the drier by purging the adsorbed water from the system.

When the pressure in the first adsorber set 610 decreases to approximately atmospheric, valve 613' is closed and valve 616 is opened to permit vacuum regeneration of the adsorbent in this portion of the system. All of the desorbed gases are caused to flow through the associated drier 614, thereby effecting final regeneration of this unit as well.

Evacuation of the two vessels 619 and 620 in the first adsorber set 610 is continued until the absolute pressure in the first vessel 619 attains a predetermined value, e.g., in the range from about 25 mm Hg to about 150 mm Hg, at which time the desorption collector means 622 in that vessel is sealed by closing valves 624, and valve 618 is closed. Evacuation of the secondary vessel 620 is continued until the pressure in that vessel decreases to a lower predetermined value, e.g., in the range from about 2 mm Hg to about 30 mm Hg depending upon the desired purity of the final oxygen product. The desorption grid 623 in the secondary vessel 620 is then sealed by closing valves 625, and valve 616 is closed to isolate the first adsorber set and associated drier 614 from the vacuum system. These adsorber elements are then again available for oxygen production in the succeeding cycle.

In the interest of equipment utilization efficiency, and to maximize the rate of oxygen production, a second identical drier and adsorber set combination 611 is provided. These components are engaged in oxygen production (as described above for combination 610) while the first drier and adsorber set 610 are experiencing regeneration and, conversely, are regenerated during the production period of the first combination 610.

Although the precise timing of the sequence of operations associated with a complete production cycle may assume any one of a number of feasible permutations, a particular policy has been found very satisfactory and will now be described for a production/evacuation cycle of about 210 secs. In the first adsorber set 610, in the production period, atmospheric intake takes about 15 secs., compressor feed takes about 30 secs. and atmospheric blowdown takes about 15 secs. Then, in the evacuation period, the first stage evacuation takes about 54 secs. and the second stage evacuation takes about 6 secs. Then the production period starts again.

In the second adsorber set 611, while the first adsorber set 610 is in its production period, the first stage evacuation takes place for about 54 secs. and the second stage evacuation takes place for about 6 secs. Then, while the first stage adsorber set 610 is in its evacuation period, the atmospheric intake in the second adsorber set 611 takes about 15 secs. It is to be noted, however, that the normalized relative time periods will be significantly influenced by such factors as vacuum pumps, etc. and are intended for purposes of illustration only.

Oxygen production from the cyclic adsorption process is temporarily stored in a surge vessel, e.g., 630a, at relatively low pressure and may be compressed to any desired final higher pressure with the aid of a suitable compressor. Where desired, the volume of both the low pressure and high pressure storage facility may be reduced by filling each vessel with a suitable adsorbent, e.g., 5A molecular sieve. The storage capacity of the packed vessel at any pressure is thereby increased significantly when compared to an empty vessel of identical volume. The rate of movement of oxygen into and out of the packed vessel is enhanced by the provision of one or more perforated, small diameter tubes which extend through the adsorbent, as illustrated in Figure 12, and which will be described in greater detail hereinafter.

Figure 7 shows a modification of a "no-heat" drier of an embodiment of this invention for larger capacity systems requiring a long drier bed length. Regeneration is enhanced by locating highly permeable foamed glass or plastic discs at appropriate intervals throughout the drier bed. Thus, as shown in Figure 7, the drier 714 is provided with an air infeed line 712 and a dried air outlet line 717 leading to the first stage adsorber set (not shown) for production. The drier is provided with a suitable adsorbent 736 as previously described, between inlet 712 and outlet 717. Adsorbent 736 is maintained in position in vessel 714 by means of porous hold-down means 737 and plug 733. Disposed in vertical spaced-apart relation within drier 714 are collector means which may be grid elements (as shown in Figures 2 and 3) or, preferably, permeable discs (as shown in Figures 4 and 5). One set of such discs 713 is connected, via suitable valves 725, to an exhaust line 716 connected to a source of vacuum (not shown), valves 725 being shown in their closed condition. An alternate set of such discs 715 is connected, via suitable valves 724, also shown in their closed condition, to a collector line 727 to the adsorber (not shown) for regeneration purposes. Thus, each alternate disc is located adjacent to a secondary bed inlet from the adsorber and a secondary outlet to the vacuum pump. As a result, the path length for moisture removal during drier regeneration is the distance between an inlet and outlet disc and is, therefore, considerably shorter than the length of the adsorber which is involved during gas drying. Consequently, the degree and efficiency of drier regeneration is enhanced.

Figure 8 shows the compaction of small gas separation systems which can be achieved by locating the second stage vessel inside the first stage vessel according to another embodiment of this invention. This expedient also serves to reduce the necessary piping and valving of the equipment and simplifies its operation. Thus, a main vessel 810 is provided, within which are located suitable interconnected drier vessel 814, primary adsorption vessel 819 and secondary adsorption vessel 820. Inlet to vessel 810 is through main inlet line 812 within which is located diaphragm valve 813 shown in its open condition, and a branch line 812a within which is diaphragm valve 831 shown in its closed condition. Line 812 leads to drier chamber 814, which connects to primary adsorption vessel 819 through line 817 within which is diaphragm valve 818, controlled by line 818a. Diaphragm 818 is shown in its open condition. Drier chamber 814 is substantially filled with suitable adsorbent 836, held in place by porous hold-down means 837 and by porous plugs 833. Primary vessel 819 is provided with vertically disposed collector means 822 (e.g., either grids as in Figures 2 and 3 or discs as in Figures 4 and 5), the operation of which is actuated by diaphragm valves 824, controlled by line 824a. Diaphragm valves 824 are shown in their controlled condition.

Primary adsorption vessel 819 is connected to secondary adsorption vessel 820 via interstage loop 825, having a porous means 833 at the inlet 832 thereof to exclude adsorbent material, and provided with a back pressure regulator, e.g., diaphragm valve 826 controlled by control line 826a. Diaphragm valve 826 is shown in its open condition. Outlet gases exit from secondary adsorption vessel 820 through outlet aperture 830 having plugs 835 therein via line 827, within which is back pressure regulator and non-return valve 828, shown in its open condition. Secondary adsorption vessel 820 is also provided with vertically disposed collector means 823 (e.g., either the grids of Figures 2 and 3 or the discs of Figures 4 and 5), the operation of which is actuated by diaphragm valves 825 controlled by line 825a. Valves 825 are shown in their closed condition.

Drier vessel 814 is provided with an outlet line 815, provided with a diaphragm valve 816, controlled by control line 816a.

The operation of this multiple vessel cascade gas evacuation system is identical to that described in the embodiment of Figure 6 and will not therefore be described further. It is noted that the numbered parts in the description of the operation of the embodiment of Figure 6 are the same as corresponding parts in Figure 8, with the exception that the parts in Figure 6 are designated within the "600"-series, while those in Figure 8 are designated within the "800"-series.

Figure 9 shows a typical suitable back pressure regulator and non-return valve 910 of one embodiment of this invention. The device 910 includes a hollow plug 911 having one closed end 912 and one or more perforations 912 through the wall thereof. The wall thereof adjacent the open end 914 is provided with an annular locking projection 915. A tubular diaphragm 916 is disposed over the mid-portion of the hollow plug 911 and is retained thereon by a tapered retaining ring 917. Tubular diaphragm 916 tapers gradually from the top 918 to the bottom 920 thereof so that the wall thickness is different along the length thereof. This permits a simple yet effective back pressure regulator and non-return valve to be provided, as will be described hereinafter.

This very simple device is, nonetheless, capable of performing the dual role of back pressure regulator and non-return valve. The cylindrical hollow plug is closed at one end and is encased in a tightly fitting tubular diaphragm which varies in wall thickness along its length. The diaphragm seals small perforations in the plug wall which communicate with the hollow core. Upon application of sufficient pressure in the core, the diaphragm is caused to expand away from the perforations and to permit an escape of gas through the annulus formed between the diaphragm and the plug. The size of this annulus or annular aperture is determined by the differential pressure across the diaphragm and, consequently, provides a proportional mode of control of the pressure. Adjustment of the pressure to the desired level is achieved by moving the diaphragm along the plug, thereby varying the thickness of the diaphragm wall, i.e., the resistance to expansion, of the diaphragm adjacent to the perforation.

The device described above also functions as an effective non-return valve since any tendency toward flow reversal implies a negative pressure gradient between the hollow core and the region surrounding the annulus or annular aperture of the diaphragm and the perforations.

A tubular diaphragm valve is an important element in the adsorption system described herein since it provides a simple and inexpensive, though extremely reliable, method for establishing a totally impervious seal for both vacuum and pressure applications. Moreover, such valve should be able to be actuated quickly and easily and should be scaled for virtually any size of pipe. The diaphragm valve described in Canadian Patent No. 986,491 issued March 30, 1976 to Robert A. Ritter and David G. Turnbull had a diaphragm which was a simple hollow cylinder which was fastened to the central core by means of complex perforated conical clamps. Such conical clamps, which were necessary to prevent billowing of the ends of the diaphragm under conditions of high internal pressure, created an excessive resistance to flow and necessitated the use of an undesirably large valve assembly. In an effort to avoid such problem, the diaphragm valve shown in Figures 10 and 11 was invented.

The valve 1010 includes a hollow tube 1011 which forms a portion of the flow path of the gas. The valve 1010 includes a hollow core 1012 sealed at one end 1013 with a cap 1014, and provided with annular protrusions 1015 near the cap 1014, and 1016 spaced a predetermined distance from the cap 1014. The core 1012 is provided with one or more perforations 1017 in its wall, located between the two spaced-apart annular protrusions 1015, 1016. A molded diaphragm 1018 is held onto the core 1012 by means of tapered rings 1019. The molded diaphragm 1018 includes two relatively thick walled end portions 1020, provided with annular depressions 1021 therein, with the walls tapering gradually towards the center 1022 to provide a relatively thin walled central portion 1023. The tapered ring 1019 seats in depression 1021 to hold the diaphragm 1018 against protrusion 1016.

In its "open" configuration, as shown in Figure 10, gas flows in the annular space between the inside wall of tube 1011 and the molded diaphragm 1018. In its "closed" position, as shown in Figure 11, fluid pressure has been applied to the core 1012 to urge the diaphragm to expand into sealing engagement with the inner wall of tube 1011.

Thus, as described above, the diaphragm valve includes a hollow core sealed at one end and partially enclosed in a specially molded, tubular, elastomeric diaphragm. A seal is created at each end of the diaphragm with the aid of an appropriately tapered ring which forces the diaphragm against circumferential protrusions located on the outer surface of the hollow core. The protrusions may be formed integrally with the core or may be created by means of "O"-rings mounted in grooves in the core surface. One or more holes through the core wall permit communication between the hollow center and the cavity existing between the tubular diaphragm and the core. Billowing is overcome by the increasing wall thickness at the ends of the diaphragm while the provision of a maximum annular free space minimizes the resistance to flow.

The diaphragm may be produced from any suitable elastomeric material. However, butyl rubber provides certain advantages in the present application since, besides its suitable endurance to repeated flexing, it is virtually totally impervious to air, and more importantly, to water vapor which, if permitted to enter the adsorber system, could eventually result in the irreversible deactivation of the adsorbent.

The core and diaphragm assembly is located axially in a cylindrical tube with a smooth inner wall surface. The tube is adapted at each end for integration into the piping system and may assume a number of configurations. Thus, either or both the entrance to and the exit from the tube may be located in line with or perpendicular to the tube.

Closure of the valve merely requires the application of fluid pressure to the hollow core and, hence, to the inner surface of the diaphragm. This pressure must be of sufficient intensity to expand the diaphragm into sealing engagement with the tube wall and to prevent the collapse of the diaphragm under the influence of the fluid pressure in the piping system.

Selection of an appropriate valve size for any given application must satisfy two criteria. First, the annulus formed between the diaphragm and the inner tube wall must provide a sufficiently large cross section for flow to avoid excessive pressure gradients. Second, the expansion required of the diaphragm to create a complete seal with the inner tube wall must be limited to delay eventual fatigue of the diaphragm material.

As noted before, it is desirable to store the enriched gas temporarily in order to equalize the flow of such gas in spite of the cyclical nature of the production. It is preferred that the gas be stored in a storage vessel such as shown in Figure 12. Here the closed vessel 1210 is a cylindrical vessel and includes a single infeed or outlet aperture 1213 thereinto. Vessel 1210 is provided with a suitable adsorbent 1211 which has an affinity for the stored gas. The adsorbent in the vessel 1210 is held in place with an adsorbent retainer 1212. Gas to be stored and recovered is led into the vessel 1210 via tube 1213 provided with a uniform array of circumferentially and longitudinally dispersed perforations 1216, through aperture 1213. Because of the presence of the adsorbent 1211, a considerably larger amount of gas may be stored therein. The perforated tube 1213 provides a relatively short adsorption and desorption path and thereby enhances movement of the gas to be stored both into and out of the vessel 1210.

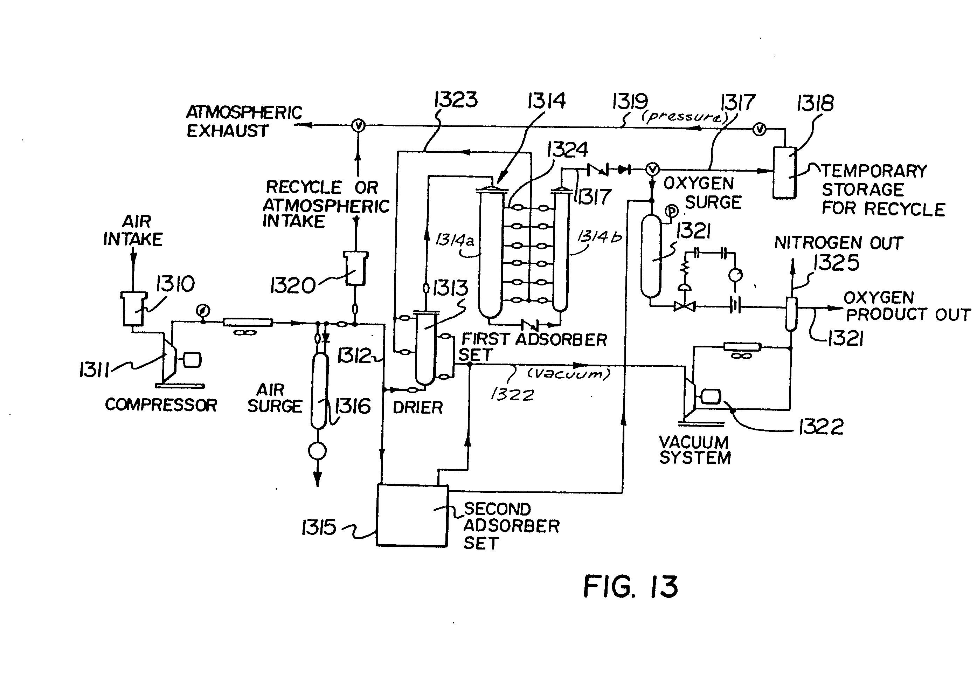

Another embodiment of the invention is shown in Figure 13. As seen in Figure 13, air intake from air intake vessel 1310 is compressed by compressor 1311 to any desired pressure and then is passed, via line 1312, to the inlet of a drier 1313 from whence it is fed to the first adsorber set 1314, i.e., primary adsorption vessel 1314a and secondary adsorption vessel 1314b, which is in its adsorption mode. The second adsorber set 1314, which is identical with the first adsorber 1314, and so will not be described in detail, is in its regeneration phase. An air surge tank 1316 is provided in line 1312 to provide substantially constant flow of air to the adsorber system.

The air from which a portion of the nitrogen has been adsorbed in the first adsorber set 1314 is passed via line 1317 to a recycle temporary storage tank 1318. This tank may be a simple "empty" tank or may have the structure shown in Figure 12. When the percentage oxygen in storage tank 1318 reaches a specified level, i.e., about 30% to about 60%, the air intake to the first adsorber set 1314 is now either supplemented or replaced by the oxygen-enriched air in storage tank 1318 via line 1319 passing through recycle or admospheric intake air tank 1320. Enrichment of the feed air by adsorption of nitrogen then continues until a pressure is detected in the outflow line 1317 which is indicative of the presence of nitrogen, at which time the first adsorber set 1314 is switched from adsorption to desorption, and the second adsorber set 1315 is switched from desorption to adsorption. The oxygen product during this stage may either be fed to the recycle temporary storage tank 1318, or may be fed through the oxygen surge tank 1321 to the oxygen product recovery line 1322.

The start-up for adsorption in the second adsorber set 1315, which involves filling the adsorber to atmospheric pressure with air, is preferably accomplished with the oxygen-enriched air from the recycle temporary storage tank 1318. The adsorption procedure for the second adsorber set 1315 follows that for the first stage adsorber set 1314.

In the desorption phase, the vacuum system 1322 applies a vacuum to drier 1313 via line 1322a which applies vacuum to the evacuation tube 1323 leading from the secondary outlets 1324 of the first adsorber set 1314. The desorbed gases, mainly nitrogen, are vented at nitrogen gas outlet 1325.

It has been found that the use of oxygen-enriched air as a feed in the adsorption cycle one or more times provides a surprisingly more pure oxygen product at a given period of time in the adsorption cycle than would be expected merely by additive effects.

The advantage of the cascade system of this invention may be demonstrated by means of a simplified theoretical analysis of the system. Assume that, in the interests of obtaining a suitable oxygen product purity, it is necessary during regeneration to reduce the residual $N_2$ adsorbate partial pressure to about 5 mm absolute. Now, since the amount of $N_2$ present on the adsorbent is linearly proportional to its partial pressure, about 0.7% of the $N_2$ present at about 760 mm absolute pressure remains after regeneration. Had the regeneration been terminated at about 50 mm absolute pressure, the amount remaining would have been about 6.6% of that at about 760 mm. However, the time required to reduce the pressure from about 50 mm to about 5 mm, thereby removing an additional 6% of nitrogen, represents about 46% of the total time required to reduce the pressure from about 760 mm to about 5 mm. If, on the other hand, the system consists of a, double vessel cascade with a vessel volume ratio of the primary stage to the secondary stage of about 9:1 and regeneration to about 5 mm from about 60 mm is applied only to the second vessel, the time required to achieve this final stage of nitrogen removal represents only about 8% of the total time required to reduce the pressure from about 760 mm in both vessels to about 50 mm in the first vessel and about 5 mm in the second vessel.

Thus, the cascade system in comparison with the single vessel system exhibits a net reduction in pumpdown time of approximately 41% with a loss in adsorption capacity of only about 5.4%. The substantially reduced pumpdown time permits an increase in cycle frequency which not only offsets this reduction in adsorbent capacity but provides a significant increase in oxygen production for a given system size and energy input.

The principle of the cascade system is not limited to two vessel combinations but, rather, can be extended to any number of vessels within practical limits. The pumpdown behaviours of the two vessel and three vessel cascade under specified conditions indicate that reduction in total pumpdown time is systematically enhanced by an increase in the number of vessels. Illustrative properties of the single vessel system and the double and triple vessel cascade systems of this invention are presented in Table 1. It should be noted that the comparison is based upon systems of equal adsorbent volume and energy consumption.

TABLE 1

|  | SWITCHING PRESSURE | RELATIVE PUMPDOWN TIME | % REDUC- TION IN PUMPDOWN TIME | % REDUC- TION IN ADSORBER CAPACITY | RELATIVE PRODUCTION CAPACITY |
|---|---|---|---|---|---|
| Single Vessel | – | 1.00 | 0 | 0. | 1.0 |
| Double Vessel | 50 mm | 0.59 | 41% | 5.4% | 1.60 |
| Triple Vessel | 150mm, 50mm | 0.43 | 57% | 14.6% | 1.99 |

The last column in Table 1 demonstrates the significant

increase in production capacity available through the application of the cascade principle of this invention.

Claims:

1. A multiple vessel cascade gas enrichment adsorber (10, 210, 310, 610, 810) including: (i) a first stage adsorption vessel (13, 213, 313, 619, 819) provided with a primary gas infeed means (111, 211, 311, 618, 817), a primary gas outflow means (32, 232, 332, 632, 825) and a mass of a suitable adsorbent material (36, 236, 336, 636, 836) in said vessel disposed between said primary infeed means and said primary outflow means; (ii) secondary gas outlet means (18, 218, 318, 622, 822) leading to secondary gas outlet lines (20, 250, 350, 627, 815) from each of said first stage adsorption vessels; (iii) valves (21, 249, 349, 624, 824) associated with each such secondary gas outlet means; and (iv) means for actuating said valves for alternate cyclical operation for a production period wherein the valves are closed to provide a long adsorption path from the primary infeed means to the primary outflow means, and an evacuation period wherein the valves are opened, to provide a short desorption path through said secondary outlet means; characterized in (1) at least one subsequent stage adsorption vessel (14, 214, 314, 620, 820) in cascading interconnection with said first stage adsorption vessel (i) through an associated interstage loop line (15, 215, 315, 621, 825), each said subsequent stage adsorption vessel being provided with a first gas inflow means (34, 234, 334, 634, 834), a first gas outlet means (30, 230, 330, 630, 827) and a mass of a suitable adsorption material (36, 236, 336, 636, 836) disposed between said first inflow means and said first gas outlet means, the first gas outlet means which is associated with the subsequent stage adsorption vessel farthest downstream from said first stage adsorption vessel being provided with an outlet back pressure regulator and non-return valve (24, 231, 331, 631, 816), each said associated interstage loop line including a back pressure regulator and valve therein (23, 253, 353, 626, 826); (2) further characterized in that said secondary outlet means (18, 218, 318, 622, 822) also lead from each of said subsequent stage adsorption vessels (14, 214, 314, 620, 820) and that each said secondary gas outlet means in each of said first stage adsorption vessel and said subsequent stage adsorption vessel includes a plurality of vertically spaced-apart, horizontally extending collector means (18,19; 218,219; 318,319; 622, 623; 822,823), disposed within each said subsequent stage adsorption vessel, each said collector means being provided with a plurality of dispersed gas inlet ports (48,49; 248; 318, 319; 622,623; 848,849);

(3) <u>still further characterized in</u> diaphragm valves (21,22; 249,249a; 349,349a; 624,625; 824,825) associated with each said collector means; and (4) <u>finally characterized in that</u> the individual volumetric size of said subsequent stage vessel or vessels is smaller than the volumetric size of said first stage vessel.

2. The multiple vessel cascade gas enrichment adsorber of claim 1 <u>characterized in that</u> there is one first stage adsorption vessel and only one subsequent stage adsorption vessel.

3. The multiple vessel cascade gas enrichment adsorber of claims 1 or 2 <u>characterized in that</u> the gas passes downwardly through said first stage adsorber vessel (13, 213, 313, 619, 819) from said primary infeed means (111, 211, 311, 618, 817) to said primary outflow means (12, 232, 332, 632, 825), through said interstage loop line (15, 215, 315, 621, 825) and upwardly through said subsequent stage adsorber vessel (14, 214, 314, 620, 820) from said first inflow means (34, 234, 334, 634, 834) to said first outlet means (30, 230, 330, 630, 827).

4. The multiple vessel cascade gas enrichment adsorber of claims 1, 2 or 3 <u>characterized in that</u> said collector means comprises hollow, tubular, empty grid-work arrangements (238, 239, 240, 241, 242).

5. The multiple vessel cascade gas enrichment adsorber of claims 1, 2 or 3 <u>characterized in that</u> said collector means comprises permeable rigid foam discs or toroids (318, 319; 622,623).

6. The multiple vessel cascade gas enrichment adsorber of any one of the preceding claims <u>characterized in</u> including retainers (37,33,35; 237,233,235; 337,333,335; 637,633,635; 837,835) within each said primary stage adsorption vessel and each said subsequent stage adsorption vessel or vessels to retain said mass of adsorbent material within each associated said vessel.

7. The multiple vessel cascade gas enrichment adsorber of any one of the preceding claims <u>characterized in that</u> each said secondary outlet means in each adsorber set leads to a common gas header (20, 250, 350, 627, 815) subjected to sub-atmospheric pressure.

8. The multiple vessel cascade gas enrichment adsorber of any one of the preceding claims <u>characterized in that</u> said diaphragm valve associated with said collector means is <u>characterized by</u>: (a) a capped hollow core (1012) provided with at least one perforation (1017) through the wall thereof; (b) a molded diaphragm (1018) secured to said hollow core (1012) at a pair of spaced-apart locations (1022) on either side of said perforation, said diaphragm having thicker walls adajcent the secured ends thereof than at the region of said perforation; and (c) means for applying gaseous pressure to said capped hollow core; thereby (d) to expand said diaphragm (1018) into sealing engagement with the inner walls of said secondary gas outlet line (1010).·

9. The multiple vessel cascade gas enrichment adsorber of any one of the preceding claims characterized in that said interstage loop line is provided with a diaphragm valve characterized by: (e) a capped hollow core (1012) provided with at least one perforation (1017) through the wall thereof; (f) a molded diaphragm (1018) secured to said hollow core (1012) at a pair of spaced-apart locations (1022) on either side of said perforation, said diaphragm having thicker walls adjacent the secured ends thereof than at the region of said perforation; and (g) means for applying gaseous pressure to said capped hollow core; thereby (h) to expand said diaphragm (1018) into sealing engagement with the inner walls of said interstage loop line (15, 215, 315, 621, 825).

10. The multiple vessel cascade gas enrichment adsorber of any one of the preceding claims in which said back pressure regulator and valve in said first outlet means from the last subsequent stage adsorption vessel is characterized by: (i) a capped hollow plug (912) having at least one perforation (913) through the wall thereof; (j) a tubular molded diaphragm (910) disposed along the central region of said plug, said diaphragm having walls whose thickness decreases gradually from the bottom (920) to the top (918) thereof, said diaphragm being secured only at the bottom thereto (915, 917) but being selectively movable longitudinally along said capped hollow plug, to situate said diaphragm with respect to said perforation (913) so that a selected diaphragm thickness is opposite said perforation (913); and (k) means for supplying gas under pressure within said hollow plug; whereby (1) the unsecured area of said diaphragm (910) is urged open upon the application of a selected pressure dependent on the thickness of the diaphragm (910) opposite said perforation (913), thereby to provide an annular flow passage.

11. The multiple vessel cascade gas enrichment adsorber of any one of the preceding claims characterized in that the individual volumetric size of each said subsequent stage adsorption vessel or vessels (14, 214, 314, 620, 820) comprises from about 5 to about 50% of that of the volumetric size of said first stage adsorption vessel (13, 213, 313, 619, 819).

12. A multiple vessel cascade gas enrichment adsorber system characterized by (A) at least two interlinked multiple vessel cascade gas enrichment adsorber sets (610,611; 1314,1315) of any one of the preceding claims and further characterized by: (B) means for cyclically feeding a gaseous mixture to a selected one of said adsorber set of vessels; (C) means for cyclically withdrawing enriched gas from a selected one of said adsorber set of vessels; and (D) control means for cyclically operating one of said adsorber set (610; 1314) of vessels in its adsorption mode, and for operating another said adsorber set (611; 1315) of vessels in its regeneration mode.

13. A multiple vessel cascade gas enrichment adsorber system characterized by (A) at least two interlinked multiple vessel cascade gas enrichment adsorber sets (610,611; 1314,1315) of any one of claims 1 - 11 inclusive and further characterized by: (B) means for cyclically feeding a gaseous mixture to a selected one of said adsorber set of vessels; (C) means for cyclically withdrawing enriched gas from a selected one of said adsorber set of vessels; (D) means (1318) for temporarily storing said withdrawn enriched gas; (E) means for selectively either recycling said stored wtihdrawn gas for use as all or a part of said gaseous mixture fed by means (B) or for recovering said stored withdrawn gas; and (F) control means for cyclically operating one of said adsorber set (610; 1314) of vessels in its adsorption mode, and for operating another said adsorber set (611; 1315) of vessels in its regeneration mode.

14. A multiple vessel cascade gas enrichment adsorber system characterized by (A) at least two interlinked multiple vessel cascade gas enrichment adsorber sets (610,611; 1314,1315) of any one of claims 1 - 11 inclusive including, in each said adsorber of said set, (v) a drier vessel (614; 1313) interconnected between said gas infeed line (612'; 1312) and said first stage adsorption vessel (619; 1314a) and also connected to said collector means (627; 1324); and (vi) a product gas storage vessel (630; 1318) connected to the product outflow line (629; 1317); and further characterized by: (B) means for cyclically feeding a gaseous mixture to a selected one of said adsorber set of vessels; (C) means for cyclically withdrawing enriched gas from a selected one of said adsorber set of vessels; and (D) control means for cyclically operating one said adsorber set (610; 1314) of vessels in its adsorption mode, and for operating another said adsorber set (611; 1315) of vessels in its regeneration mode.

15. A multiple vessel cascade gas enrichment adsorber system characterized by (A) at least two interlinked multiple vessel cascade gas enrichment adsorber sets (1314, 1315) of claim 14 including, in each said adsorber of said set, (vii) a recycle gas temporary gas storage vessel (1318) connected to the product outflow line (1317); and further characterized by: (B) means for cyclically feeding a gaseous mixture to a selected one of said adsorber set of vessels; (C) means for cyclically withdrawing enriched gas from a selected one of said adsorber set of vessels; (D) means (1318) for temporarily storing said withdrawn enriched gas; (E) means for selectively recycling said temporarily stored withdrawn gas for use as all or a part of said gaseous mixture fed by means (B); and (F) control means for cyclically operating one said adsorber set of vessels in its adsorption mode, and for operating another said adsorber set of vessels in its regeneration mode.

16. The multiple vessel cascade gas enrichment adsorption system of claims 12, 13, 14 or 15 characterized in including a common gas infeed line (11, 12, 12a; 612, 612a; 1312) to each said adsorber set, said common gas infeed line being provided with suitable valves (25,25a; 613,613a) selectively actuatable to feed a selected adsorber set.

17. The multiple vessel cascade gas enrichment adsorption system of claims 12, 13, 14, 15 or 16 characterized in including a common product outlet line (16, 629, 1317) from each said adsorber set, said product outlet line being provided with suitable valves (24, 24a, 631), selectively actuatable to withdraw product gas from a selected adsorber set.

18. The multiple vessel cascade gas enrichment adsorption system of any one of claims 12 - 17 inclusive in which said suitable valve is characterized by: (a) a capped hollow core (1012) provided with at least one perforation (1017) through the wall thereof; (b) a molded diaphragm (1018) secured to said hollow core (1012) at a pair of spaced-apart locations (1022) on either side of said perforation, said diaphragm (1018) having thicker walls adjacent the secured ends (1022) thereof than at the region of said perforation (1017); and (c) means

for applying gaseous pressure to said capped hollow core (1012); thereby (d) to expand said diaphragm (1018) into sealing engagement with the inner walls of said common line.

19. A multiple vessel cascade gas enrichment adsorber system characterized by (A) at least two interlinked multiple vessel cascade gas enrichment adsorber sets (610,611; 1314,1315) of any one of claims 1 - 11 inclusive including, in each said adsorber of said set, (viii) said subsequent stage adsorption vessel (820) being disposed within the same vessel (810) as said first stage adsorber vessel (819); (ix) said collector means (822, 823) being disposed vertically rather than horizontally; and (x) a drier (814) disposed within the same vessel (810) as said first stage adsorber vessel (819) and preceding said first stage adsorber vessel (819), said drier including a diaphragm valved (813) bifurcated inlet means (812,812a), a diaphragm valved (818) inlet to said first stage (819) of said adsorber set, and a diaphragm valved (828) outlet (827) from said subsequent stage adsorption vessel (820); and characterized by: (B) means for cyclically feeding a gaseous mixture to a selected one of said adsorber set of vessels; (C) means for cyclically withdrawing enriched gas from a selected one of said adsorber set of vessels; and (D) control means for cyclically operating one said adsorber set of vessels in its adsorption mode, and for operating another said adsorber set in its regeneration mode.

20. The multiple vessel cascade gas enrichment adsorber system of claims 14, 15, 18 or 19 characterized in that said drier (714) is characterized by a vessel provided with drier primary gas inlet means (712), drier primary gas outlet means (717) and a mass of a suitable adsorption material (736) disposed between said drier primary gas inlet means (712) and said drier primary gas outlet means (717), secondary gas inlet means (724) leading from said secondary gas outlet means of said adsorber set, and secondary gas outlet means (716) leading to secondary gas outlet line.

21. The multiple vessel cascade gas enrichment adsorber system of claim 20 characterized in that said secondary gas outlet means (716, 724) includes a plurality of vertically spaced-apart, horizontally extending collector means (713, 715) disposed therewithin, each said collector means (713, 715) being provided with a plurality of dispersed gas inlet ports, said collector means (713, 715) also including a diaphragm valve (724, 725) associated therewith.

22. The multiple vessel cascade gas enrichment adsorber system of claims 14, 15, 18, 19, 20 or 21 characterized in that, in said drier (714), said collector means (713, 715) comprises hollow, tubular, empty grid-work arrangements (238, 239, 240, 241, 242).

23. The multiple vessel cascade gas enrichment adsorber system of claims 14, 15, 18, 19, 20 or 21 characterized in that, in said drier (714), said collector means (713, 715) comprises permeable rigid foam discs or toroids (318,319; 622,623).

24. The multiple vessel cascade gas enrichment adsorber system of claims 14, 15, 18, 19, 20, 21, 22 or 23 characterized in that, in said drier (714), each said secondary outlet means (716, 727) in each adsorber set leads to a common gas header subjected to sub-atmospheric pressure.

25. The integrated multiple vessel cascade gas enrichment adsorber of claims 14, 15, 18, 19, 20, 21, 22, 23 or 24 in which, in said drier, said diaphragm valve is characterized by: (e) a capped hollow core (1012) provided with at least one perforation (1017) through the wall thereof; (f) a molded diaphragm (1018) secured to said hollow core (1012) at a pair of spaced-apart locations (1022) on either side of said perforation, said diaphragm (1018) having thicker walls adjacent the secured ends (1022) thereof than at the region of said perforation (1017); and (G) means for applying gaseous pressure to said capped hollow core; thereby (h) to expand said diaphragm (1018) into sealing engagement with the inner walls of said secondary gas outlet line.

26. A method of operating a gas enrichment system as claimed in any one of the preceding claims 1 - 25 inclusive wherein each set of a first adsorber set and a second adsorber set is cyclically subjected to a production period and to an evacuation period, which method comprises a sequential plurality of cycles, in which each cycle is characterized by: (X) carrying out said production period in said first adsorber set by flowing gas through an enclosed adsorption zone in the sequential steps of atmospheric intake, compressor feed and atmospheric blowdown, while substantially simultaneously carrying out said evacuation period in said second adsorber set by subjecting an enclosed adsorption zone to sub-atmospheric pressure in the sequential steps of a first and subsequent stage evacuation, followed by subsequent stage evacuation; and (Y) carrying out said production period in said second adsorber set by flowing gas through an enclosed adsorption zone in the sequential steps of atmospheric intake, compressor feed and atmospheric blowdown, while substantially simultaneously carrying out said evacuation period in said first adsorber set by subjecting an enclosed adsorption zone to sub-atmospheric pressure in the sequential steps of a first and subsequent stage evacuation, followed by subsequent stage evacuation.

27. The method of claim 26 <u>characterized in that</u> said step of atmospheric intake is achieved with oxygen-enriched air recycled from a previous adsorption stage.

28. The method of claims 26 or 27 <u>characterized in that</u> said step of compressor feed is achieved with air supplemented by oxygen-enriched air recycled from a previous adsorption zone.

29. The method of claims 26 or 27 <u>characterized in that</u> said step of compressor feed is achieved with oxygen-enriched air recycled from a previous adsorption phase.

30. The method of claims 26, 27, 28 or 29 <u>characterized in that</u> there is one first stage adsorption vessel and only one subsequent or second stage adsorption vessel, and which method is <u>characterized by</u>: carrying out said evacuation period by first drawing through both the first stage adsorption vessel and said second stage adsorption vessel until a first predetermined vacuum level is reached; and then drawing through only said second stage adsorption vessel at a higher predetermined vacuum level until the evacuation phase of the cycle is essentially completed.

31. The method of claim 30 <u>characterized in that</u> said first predetermined vacuum level is about 25 to about 150 mm Hg absolute pressure, and <u>characterized in that</u> said higher predetermined vacuum level is about 2 to about 30 mm Hg absolute pressure.

32. The method of claims 26, 27, 28, 29, 30 or 31 <u>characterized in that</u> there is a first stage adsorption vessel, a second subsequent stage adsorption vessel, and a third subsequent stage adsorption vessel, and which method is <u>characterized by</u>: carrying out said evacuation period by first drawing through said first stage adsorption vessel and through said second and third subsequent stage adsorption vessels, until a first predetermined vacuum level is reached; then drawing only through said second stage adsorption vessel and said third stage adsorption vessel until a second higher predetermined vacuum level is reached; and finally drawing through only said third stage adsorption vessel at a still higher predetermined vacuum until the evacuation phase of the cycle is essentially completed.

33. A diaphragm valve for use with a hollow, gas conducting tube to control the flow of gas therethrough characterized in: (e) a capped hollow core (1012) provided with at least one perforation (1017) through the wall thereof; (f) a molded diaphragm (1018) secured to said hollow core (1012) at a pair of spaced-apart locations (1022) on either side of said perforation, said diaphragm (1018) having thicker walls adjacent the secured ends (1021) thereof than at the region of said perforation; and (g) means for applying gaseous pressure to said capped hollow core; thereby (h) to expand said diaphragm (1018) into sealing engagement with the inner walls of said gas conducting tube.

34. The diaphragm valve of claim 33 characterized in that said hollow core (1012) is provided with a plurality of perforations.

35. The diaphragm valve of claims 33 or 34 charaterized in that said hollow core is provided with a pair of spaced-apart protrusions (1016, 1020) whereby said diaphragm may be secured thereto by tapered rings (1019).

36. The diaphragm valve of claims 33, 34 or 35 characterized in that said diaphragm (1018) is secured to said hollow core (1012) by means of O-rings cooperatively engaging with spaced-apart grooves on the circumference of said hollow core.

37. The diaphragm valve of claims 33, 34, 35 or 36 characterized in that said diaphragm is formed from butyl rubber.

38. A back pressure regulator and non-return valve including a capped hollow plug (911) having at least one perforation (913) through the wall thereof; a tubular molded diaphragm (910) disposed along the central region of said plug (911); and means for supplying gas under pressure within said hollow plug; characterized in that said diaphragm (910) has walls whose thickness decreases gradually from the bottom (920) to the top (918) thereof, said diaphragm (910) being secured only at the bottom (915, 917) thereto but being selectively movable longitudinally along said capped hollow plug (911), to situate said diaphragm (910) with respect to said perforation (913) so that a selected diaphragm thickness is opposite said perforation (913); whereby the unsecured area of said diaphragm (910) is urged open upon the application of a selected pressure dependent on the thickness of the

0031006

diaphragm (910) opposite said perforation (913), thereby to provide an annular flow passage.

39. The back pressure regulator and non-return valve of claim 39 <u>characterized in that</u> said capped hollow plug (911) includes a plurality of perforations (913) through the wall thereof.

40. The back pressure regulator and non-return valve of claims 38 or 39 <u>characterized in that</u> said diaphragm (910) is secured to said capped hollow plug (911) by cooperation between a tapered locking ring (917) and an annular locking projection (915) on the capped hollow ring.

41. The back pressure regulator and non-return valve of claims 38 or 39 <u>characterized in that</u> said diaphragm (910) is secured to said capped hollow plug (911) by means of an O-ring cooperatively engaging with a groove on the circumference of said capped hollow plug (911).

42. The back pressure regulator and non-return valve of claims 38, 39, 40 or 41 <u>characterized in that</u> said diaphragm valve (910) is formed from butyl rubber.

43. A storage vessel including a closed vessel (1210); a mass of adsorbent material (1211) disposed within said vessel; and means (1213) providing entry into said closed vessel (1210) and selectively actuatable to provide inlet means to, or outlet means from, said vessel (1210); <u>characterized in that</u> it includes a perforated tube (1215) connected to said entry means and extending, axially along the length thereof, for the introduction of gas to be stored therein along a long adsorption path, and removal of gas stored therein along a short desorption path.

44. The storage vessel of claim 43 <u>characterized in that</u> it is in the form of a cylinder.

45. The storage vessel of claims 43 or 44 <u>characterized in that</u> said perforated tube includes perforations (1216) uniformly spaced both circumferentially thereon and longitudinally therealong.

Fig 1

Fig 2

Fig 3

Fig 4

Fig 5

0031006

Fig 6

716

725

715

714

725

715

725

715

733    717

712

737

713

736

724

713

736

724

713

727

724

Fig 7

Fig 8

Fig 9

Fig 12

VALVE OPEN

VALVE CLOSED

1014
1013
1011
1019
1015
1020
1010
1021
1017
1018
1023 } 1022
1020
1019
1021
1016
1012

1020
1014
1013
1015
1019
1021
1018
1017
1010
1021
1019
1020
1016
1012

Fig 10

Fig 11

FIG. 13

0031006

<br>

**European Patent Office**

**EUROPEAN SEARCH REPORT**

Application number

EP 80 10 6389.2

| | DOCUMENTS CONSIDERED TO·BE RELEVANT | | CLASSIFICATION OF THE APPLICATION (Int. Cl.³) |
|---|---|---|---|
| Category | Citation of document with indication, where appropriate, of relevant passages | Relevant to claim | |
| A | US - A - 3 849 089 (R.A. RITTER et al.) <br> * complete document * | | B 01 D 53/04 |
| D | & CA - A - 986 424 <br> -- | | |
| A | US - A - 1 777 460 (BARNEBEY) <br> * complete document * <br> -- | | |
| A | US - A - 2 800 197 (WYNKOOP) <br> * fig. 1 * <br> -- | | |
| A | US - A - 3 980 454 (HISHINUMA et al.) <br> * complete document * <br> -- | | B 01 D 53/02 <br> B 01 D 53/04 |
| A | US - A - 4 021 211 (K. TUREK et al.) <br> * fig. 1 * <br> -- | | |
| A | DE - C - 882 541 (GESELLSCHAFT FÜR LINDE'S EISMASCHINEN) <br> * position 21 * <br> -- | | |
| A | DE - A - 2 207 117 (BERGWERKSVER-BAND) <br> * fig. 1 * <br> & US - A - 4 015 956 <br> -- | | |
| A | DE -A1 - 2 724 763 (LINDE AG) <br> * fig. 1 * <br> ---- | | |

**TECHNICAL FIELDS SEARCHED (Int. Cl.³)**

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| [X] | The present search report has been drawn up for all claims | | |
|---|---|---|---|
| Place of search <br> Berlin | Date of completion of the search <br> 31-03-1981 | Examiner <br> KÜHN | |

EPO Form 1503.1  06.78